# EUROPEAN PATENT SPECIFICATION

(11) **EP 3 345 437 B1**
(45) Date of publication and mention of the grant of the patent: **19.06.2019**
(21) Application number: 16747967.4
(22) Date of filing: 26.07.2016
(51) Int. Cl.: H04W 52/10, H04W 52/24, H04W 52/38

(54) **METHOD AND APPARATUS FOR POWER CONTROL IN D2D/WAN COEXISTENCE NETWORKS**
VERFAHREN UND VORRICHTUNG ZUR LEISTUNGSSTEUERUNG IN D2D/WAN-KOEXISTENZNETZWERKEN
PROCÉDÉ ET APPAREIL POUR LA COMMANDE DE PUISSANCE DANS DES RÉSEAUX DE COEXISTENCE D2D/WAN

(30) Priority: 01.09.2015 US 201514842194
(43) Date of publication of application: 11.07.2018
(73) Proprietor: Qualcomm Incorporated, San Diego, CA 92121-1714 (US)
(72) Inventor: LI, Chong, San Diego, California 92121-1714 (US); PATIL, Shailesh, San Diego, California 92121-1714 (US); TAVILDAR, Saurabha Rangrao, San Diego, California 92121-1714 (US)
(74) Representative: Dunlop, Hugh Christopher
(86) International application number: PCT/US2016/044111
(87) International publication number: WO 2017/039880

(56) References cited:
- EP-A1- 2 787 778
- WO-A1-2015/029980
- CN-A- 104 488 332
- NOKIA NETWORKS ET AL: "On remaining details of D2D transmission power control", 3GPP DRAFT; R1-143252, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Dresden, Germany; 20140818 - 20140822 17 August 2014 (2014-08-17), XP050788728, Retrieved from the Internet: URL:http://www.3gpp.org/ftp/Meetings_3GPP_ SYNC/RAN1/Docs/ [retrieved on 2014-08-17]

## Description

### CROSS-REFERENCE TO RELATED APPLICATION

This application claims the benefit of U.S. Patent Application No. 14/842,194, entitled "METHOD AND APPARATUS FOR POWER CONTROL IN D2D/WAN COEXISTENCE NETWORKS" and filed on September 1, 2015.

### BACKGROUND

### Field

The present disclosure relates generally to communication systems, and more particularly, to power control mechanisms for coexistence in device-to-device and wireless wide area network networks.

### Background

Wireless communication systems are widely deployed to provide various telecommunication services such as telephony, video, data, messaging, and broadcasts. Typical wireless communication systems may employ multiple-access technologies capable of supporting communication with multiple users by sharing available system resources (e.g., bandwidth, transmit power). Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems.

These multiple access technologies have been adopted in various telecommunication standards to provide a common protocol that enables different wireless devices to communicate on a municipal, national, regional, and even global level. An example telecommunication standard is Long Term Evolution (LTE). LTE is a set of enhancements to the Universal Mobile Telecommunications System (UMTS) mobile standard promulgated by Third Generation Partnership Project (3GPP). LTE is designed to better support mobile broadband Internet access by improving spectral efficiency, lowering costs, improving services, making use of new spectrum, and better integrating with other open standards using OFDMA on the downlink (DL), SC-FDMA on the uplink (UL), and multiple-input multiple-output (MIMO) antenna technology. However, as the demand for mobile broadband access continues to increase, there exists a need for further improvements in LTE technology. Preferably, these improvements should be applicable to other multi-access technologies and the telecommunication standards that employ these technologies.

WO 2015/029980 A1 (KYOCERA CORP) 5 March 2015, relates to the setting of transmission power control parameters in a wireless communications system. CN 104 488 332 A (HUAWEI TECHNOLOGIES CO LTD) 1 April 2015, relates to transmit power control in device to device communications. NOKIA NETWORKS ET AL: "On remaining details of D2D transmission power control", 3GPP DRAFT; R1-143252, 3RD GENERATION PARTNERSHIP PROJECT (3GPP), vol. RAN WG1, no. Dresden, Germany; 17 August 2014, relates to device to device transmission power control. EP 2 787 778 A1 (NOKIA SOLUTIONS) 8 October 2014, relates to retrieving, by an eNB, subframe type information wherein a power control parameter may be indicated in reused bits of a transmit power command.

### SUMMARY

The invention is defined by the appended set of claims.

In an aspect of the disclosure, a method, a computer-readable medium, and an apparatus are provided. The apparatus may include memory and at least one processor, coupled to the memory, configured to determine a transmission condition associated with communication over a wireless channel. The processor may be configured to select a set of open-loop power control parameters of at least two sets of open-loop power control parameters based on the transmission condition. The processor may be configured to transmit over the wireless channel with a power based on the selected set of open-loop power control parameters. The apparatus may be a mobile station, such as a user equipment (UE). The open-loop power control parameters may be received from a base station, such as a node B or an evolved Node B (eNB).

The method may include the operations of determining a transmission condition associated with communication over a wireless channel, selecting a set of open-loop power control parameters of at least two sets of open-loop power control parameters based on the transmission condition, and transmitting over the wireless channel with a power based on the selected set of open-loop power control parameters.

The computer-readable medium may store computer executable code for wireless communication, including code for determining a transmission condition associated with communication over a wireless channel, selecting a set of open-loop power control parameters of at least two sets of open-loop power control parameters based on the transmission condition, and transmitting over the wireless channel with a power based on the selected set of open-loop power control parameters. Other aspects may be described herein.

### BRIEF DESCRIPTION OF THE DRAWINGS

FIG. 1 is a diagram illustrating an example of a network architecture.
FIG. 2 is a diagram illustrating an example of an access network.
FIG. 3 is a diagram illustrating an example of a DL frame structure in LTE.
FIG. 4 is a diagram illustrating an example of an UL frame structure in LTE.
FIG. 5 is a diagram illustrating an example of a radio protocol architecture for the user and control planes.
FIG. 6 is a diagram illustrating an example of an evolved Node B and user equipment in an access network.
FIG. 7 is a diagram of a device-to-device communications system.
FIG. 8 is a diagram illustrating a device-to-device communications system coexisting with a wireless wide area network communications system and conceptual flow of operations for power control in the coexisting networks.
FIG. 9 is a flowchart illustrating a method for power control in a device-to-device and/or wireless wide area network.
FIG. 10 is a conceptual data flow diagram illustrating the data flow between different modules/means/components in an exemplary apparatus.
FIG. 11 is a diagram illustrating an example of a hardware implementation for an apparatus employing a processing system.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

Several aspects of telecommunication systems will now be presented with reference to various apparatus and methods. These apparatus and methods will be described in the following detailed description and illustrated in the accompanying drawings by various blocks, modules, components, circuits, steps, processes, algorithms, etc. (collectively referred to as "elements"). These elements may be implemented using electronic hardware, computer software, or any combination thereof. Whether such elements are implemented as hardware or software depends upon the particular application and design constraints imposed on the overall system.

By way of example, an element, or any portion of an element, or any combination of elements may be implemented with a "processing system" that includes one or more processors. Examples of processors include microprocessors, microcontrollers, digital signal processors (DSPs), field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise.

Accordingly, in one or more exemplary aspects, the functions described may be implemented in hardware, software, firmware, or any combination thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can include a random-access memory (RAM), a read-only memory (ROM), an electrically erasable programmable ROM (EEPROM), compact disk ROM (CD-ROM) or other optical disk storage, magnetic disk storage or other magnetic storage devices, combinations of the aforementioned types of computer-readable media, or any other medium that can be used to store computer executable code in the form of instructions or data structures that can be accessed by a computer.

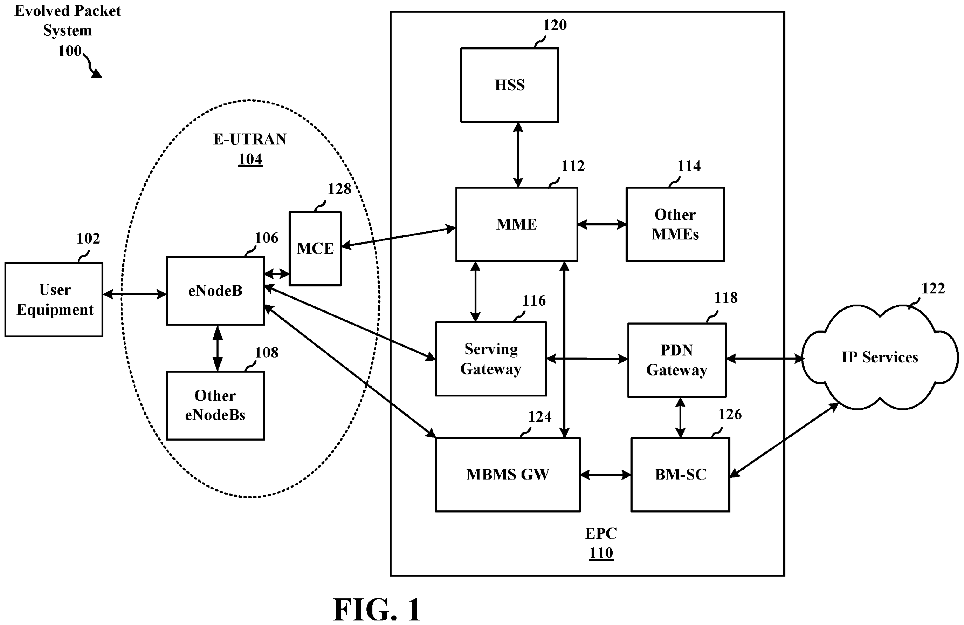

FIG. 1 is a diagram illustrating an LTE network architecture 100. The LTE network architecture 100 may be referred to as an Evolved Packet System (EPS) 100. The EPS 100 may include one or more user equipment (UE) 102, an Evolved UMTS Terrestrial Radio Access Network (E-UTRAN) 104, an Evolved Packet Core (EPC) 110, and an Operator's Internet Protocol (IP) Services 122. The EPS can interconnect with other access networks, but for simplicity those entities/interfaces are not shown. As shown, the EPS provides packet-switched services, however, as those skilled in the art will readily appreciate, the various concepts presented throughout this disclosure may be extended to networks providing circuit-switched services.

The E-UTRAN includes the evolved Node B (eNB) 106 and other eNBs 108, and may include a Multicast Coordination Entity (MCE) 128. The eNB 106 provides user and control planes protocol terminations toward the UE 102. The eNB 106 may be connected to the other eNBs 108 via a backhaul (e.g., an X2 interface). The MCE 128 allocates time/frequency radio resources for evolved Multimedia Broadcast Multicast Service (MBMS) (eMBMS), and determines the radio configuration (e.g., a modulation and coding scheme (MCS)) for the eMBMS. The MCE 128 may be a separate entity or part of the eNB 106. The eNB 106 may also be referred to as a base station, a Node B, an access point, a base transceiver station, a radio base station, a radio transceiver, a transceiver function, a basic service set (BSS), an extended service set (ESS), or some other suitable terminology. The eNB 106 provides an access point to the EPC 110 for a UE 102. Examples of UEs 102 include a cellular phone, a smart phone, a session initiation protocol (SIP) phone, a laptop, a personal digital assistant (PDA), a satellite radio, a global positioning system, a multimedia device, a video device, a digital audio player (e.g., MP3 player), a camera, a game console, a tablet, or any other similar functioning device. The UE 102 may also be referred to by those skilled in the art as a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology.

The eNB 106 is connected to the EPC 110. The EPC 110 may include a Mobility Management Entity (MME) 112, a Home Subscriber Server (HSS) 120, other MMEs 114, a Serving Gateway 116, a Multimedia Broadcast Multicast Service (MBMS) Gateway 124, a Broadcast Multicast Service Center (BM-SC) 126, and a Packet Data Network (PDN) Gateway 118. The MME 112 is the control node that processes the signaling between the UE 102 and the EPC 110. Generally, the MME 112 provides bearer and connection management. All user IP packets are transferred through the Serving Gateway 116, which itself is connected to the PDN Gateway 118. The PDN Gateway 118 provides UE IP address allocation as well as other functions. The PDN Gateway 118 and the BM-SC 126 are connected to the IP Services 122. The IP Services 122 may include the Internet, an intranet, an IP Multimedia Subsystem (IMS), a PS Streaming Service (PSS), and/or other IP services. The BM-SC 126 may provide functions for MBMS user service provisioning and delivery. The BM-SC 126 may serve as an entry point for content provider MBMS transmission, may be used to authorize and initiate MBMS Bearer Services within a public land mobile network (PLMN), and may be used to schedule and deliver MBMS transmissions. The MBMS Gateway 124 may be used to distribute MBMS traffic to the eNBs (e.g., 106, 108) belonging to a Multicast Broadcast Single Frequency Network (MBSFN) area broadcasting a particular service, and may be responsible for session management (start/stop) and for collecting eMBMS related charging information.

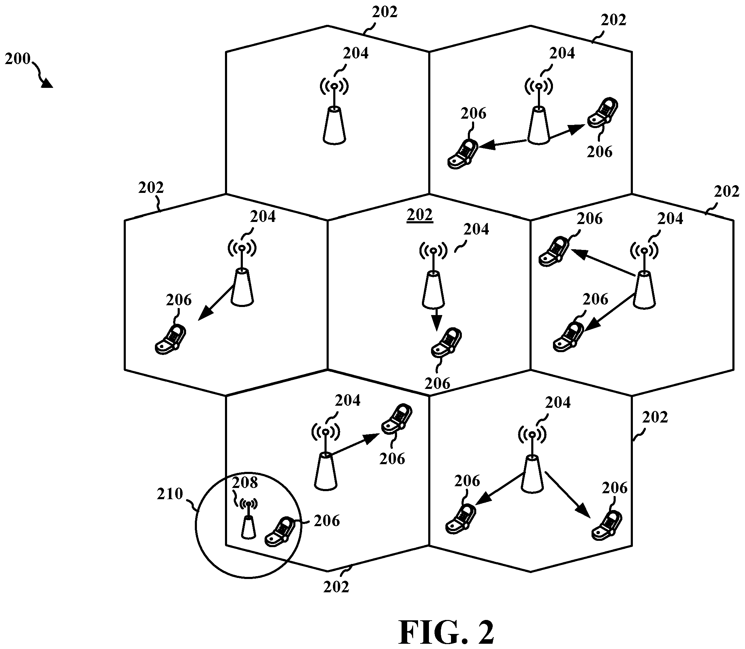

FIG. 2 is a diagram illustrating an example of an access network 200 in an LTE network architecture. In this example, the access network 200 is divided into a number of cellular regions (cells) 202. One or more lower power class eNBs 208 may have cellular regions 210 that overlap with one or more of the cells 202. The lower power class eNB 208 may be a femto cell (e.g., home eNB (HeNB)), pico cell, micro cell, or remote radio head (RRH). The macro eNBs 204 are each assigned to a respective cell 202 and are configured to provide an access point to the EPC 110 for all the UEs 206 in the cells 202. There is no centralized controller in this example of an access network 200, but a centralized controller may be used in alternative configurations. The eNBs 204 are responsible for all radio related functions including radio bearer control, admission control, mobility control, scheduling, security, and connectivity to the serving gateway 116. An eNB may support one or multiple (e.g., three) cells (also referred to as a sectors). The term "cell" can refer to the smallest coverage area of an eNB and/or an eNB subsystem serving a particular coverage area. Further, the terms "eNB," "base station," and "cell" may be used interchangeably herein.

The modulation and multiple access scheme employed by the access network 200 may vary depending on the particular telecommunications standard being deployed. In LTE applications, OFDM is used on the DL and SC-FDMA is used on the UL to support both frequency division duplex (FDD) and time division duplex (TDD). As those skilled in the art will readily appreciate from the detailed description to follow, the various concepts presented herein are well suited for LTE applications. However, these concepts may be readily extended to other telecommunication standards employing other modulation and multiple access techniques. By way of example, these concepts may be extended to Evolution-Data Optimized (EV-DO) or Ultra Mobile Broadband (UMB). EV-DO and UMB are air interface standards promulgated by the 3rd Generation Partnership Project 2 (3GPP2) as part of the CDMA2000 family of standards and employs CDMA to provide broadband Internet access to mobile stations. These concepts may also be extended to Universal Terrestrial Radio Access (UTRA) employing Wideband-CDMA (W-CDMA) and other variants of CDMA, such as TD-SCDMA; Global System for Mobile Communications (GSM) employing TDMA; and Evolved UTRA (E-UTRA), IEEE 802.11 (Wi-Fi), IEEE 802.16 (WiMAX), IEEE 802.20, and Flash-OFDM employing OFDMA. UTRA, E-UTRA, UMTS, LTE and GSM are described in documents from the 3GPP organization. CDMA2000 and UMB are described in documents from the 3GPP2 organization. The actual wireless communication standard and the multiple access technology employed will depend on the specific application and the overall design constraints imposed on the system.

The eNBs 204 may have multiple antennas supporting MIMO technology. The use of MIMO technology enables the eNBs 204 to exploit the spatial domain to support spatial multiplexing, beamforming, and transmit diversity. Spatial multiplexing may be used to transmit different streams of data simultaneously on the same frequency. The data streams may be transmitted to a single UE 206 to increase the data rate or to multiple UEs 206 to increase the overall system capacity. This is achieved by spatially precoding each data stream (i.e., applying a scaling of an amplitude and a phase) and then transmitting each spatially precoded stream through multiple transmit antennas on the DL. The spatially precoded data streams arrive at the UE(s) 206 with different spatial signatures, which enables each of the UE(s) 206 to recover the one or more data streams destined for that UE 206. On the UL, each UE 206 transmits a spatially precoded data stream, which enables the eNB 204 to identify the source of each spatially precoded data stream.

Spatial multiplexing is generally used when channel conditions are good. When channel conditions are less favorable, beamforming may be used to focus the transmission energy in one or more directions. This may be achieved by spatially precoding the data for transmission through multiple antennas. To achieve good coverage at the edges of the cell, a single stream beamforming transmission may be used in combination with transmit diversity.

In the detailed description that follows, various aspects of an access network will be described with reference to a MIMO system supporting OFDM on the DL. OFDM is a spread-spectrum technique that modulates data over a number of subcarriers within an OFDM symbol. The subcarriers are spaced apart at precise frequencies. The spacing provides "orthogonality" that enables a receiver to recover the data from the subcarriers. In the time domain, a guard interval (e.g., cyclic prefix) may be added to each OFDM symbol to combat inter-OFDM-symbol interference. The UL may use SC-FDMA in the form of a DFT-spread OFDM signal to compensate for high peak-to-average power ratio (PAPR).

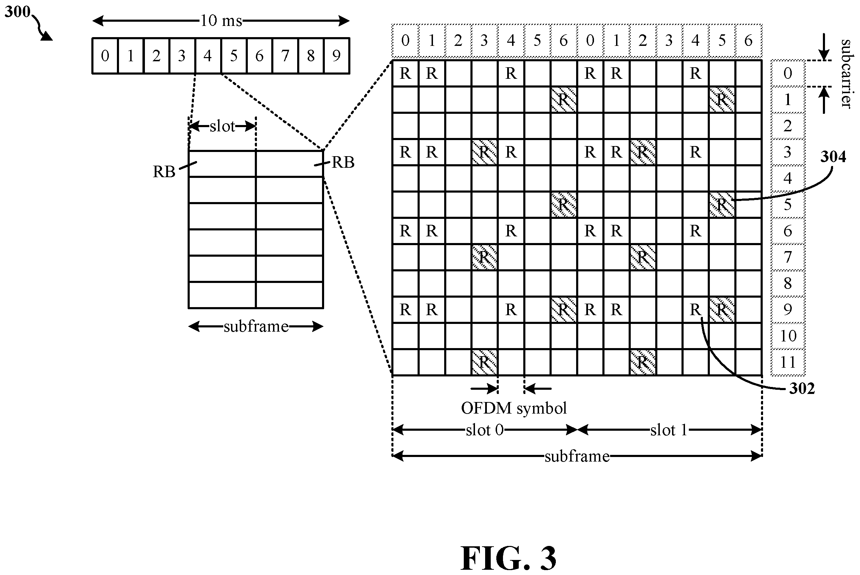

FIG. 3 is a diagram 300 illustrating an example of a DL frame structure in LTE. A frame (10 ms) may be divided into 10 equally sized subframes. Each subframe may include two consecutive time slots. A resource grid may be used to represent two time slots, each time slot including a resource block. The resource grid is divided into multiple resource elements. In LTE, for a normal cyclic prefix, a resource block contains 12 consecutive subcarriers in the frequency domain and 7 consecutive OFDM symbols in the time domain, for a total of 84 resource elements. For an extended cyclic prefix, a resource block contains 12 consecutive subcarriers in the frequency domain and 6 consecutive OFDM symbols in the time domain, for a total of 72 resource elements. Some of the resource elements, indicated as R 302, 304, include DL reference signals (DL-RS). The DL-RS include Cell-specific RS (CRS) (also sometimes called common RS) 302 and UE-specific RS (UE-RS) 304. UE-RS 304 are transmitted on the resource blocks upon which the corresponding physical DL shared channel (PDSCH) is mapped. The number of bits carried by each resource element depends on the modulation scheme. Thus, the more resource blocks that a UE receives and the higher the modulation scheme, the higher the data rate for the UE.

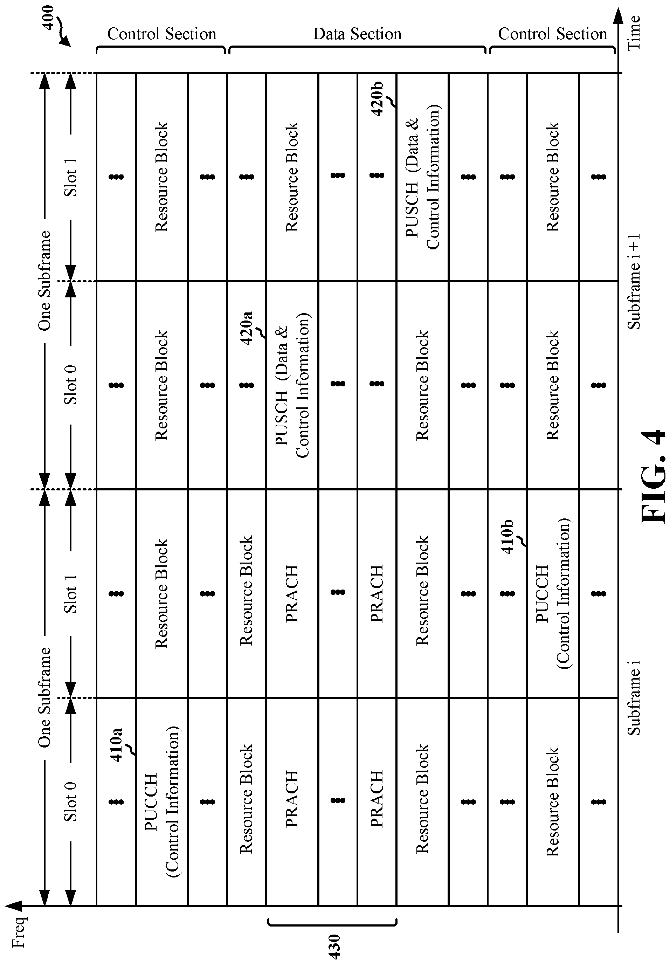

FIG. 4 is a diagram 400 illustrating an example of an UL frame structure in LTE. The available resource blocks for the UL may be partitioned into a data section and a control section. The control section may be formed at the two edges of the system bandwidth and may have a configurable size. The resource blocks in the control section may be assigned to UEs for transmission of control information. The data section may include all resource blocks not included in the control section. The UL frame structure results in the data section including contiguous subcarriers, which may allow a single UE to be assigned all of the contiguous subcarriers in the data section.

A UE may be assigned resource blocks 410a, 410b in the control section to transmit control information to an eNB. The UE may also be assigned resource blocks 420a, 420b in the data section to transmit data to the eNB. The UE may transmit control information in a physical UL control channel (PUCCH) on the assigned resource blocks in the control section. The UE may transmit data or both data and control information in a physical UL shared channel (PUSCH) on the assigned resource blocks in the data section. A UL transmission may span both slots of a subframe and may hop across frequency.

A set of resource blocks may be used to perform initial system access and achieve UL synchronization in a physical random access channel (PRACH) 430. The PRACH 430 carries a random sequence and cannot carry any UL data/signaling. Each random access preamble occupies a bandwidth corresponding to six consecutive resource blocks. The starting frequency is specified by the network. That is, the transmission of the random access preamble is restricted to certain time and frequency resources. There is no frequency hopping for the PRACH. The PRACH attempt is carried in a single subframe (1 ms) or in a sequence of few contiguous subframes and a UE can make a single PRACH attempt per frame (10 ms).

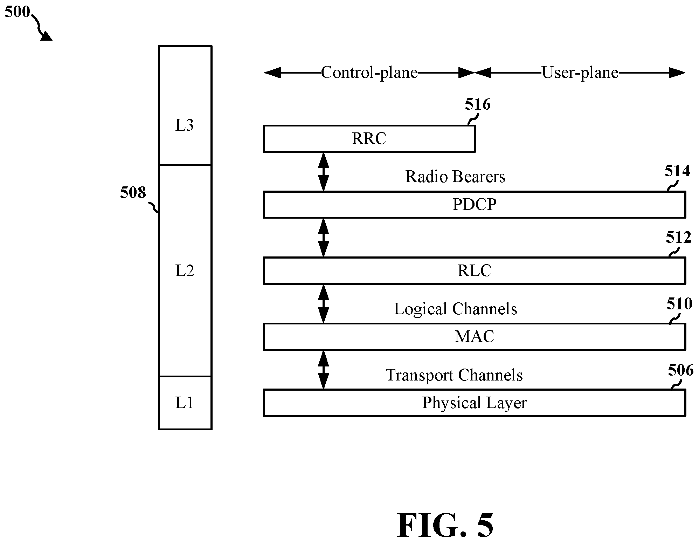

FIG. 5 is a diagram 500 illustrating an example of a radio protocol architecture for the user and control planes in LTE. The radio protocol architecture for the UE and the eNB is shown with three layers: Layer 1, Layer 2, and Layer 3. Layer 1 (L1 layer) is the lowest layer and implements various physical layer signal processing functions. The L1 layer will be referred to herein as the physical layer 506. Layer 2 (L2 layer) 508 is above the physical layer 506 and is responsible for the link between the UE and eNB over the physical layer 506.

In the user plane, the L2 layer 508 includes a media access control (MAC) sublayer 510, a radio link control (RLC) sublayer 512, and a packet data convergence protocol (PDCP) 514 sublayer, which are terminated at the eNB on the network side. Although not shown, the UE may have several upper layers above the L2 layer 508 including a network layer (e.g., IP layer) that is terminated at the PDN gateway 118 on the network side, and an application layer that is terminated at the other end of the connection (e.g., far end UE, server, etc.).

The PDCP sublayer 514 provides multiplexing between different radio bearers and logical channels. The PDCP sublayer 514 also provides header compression for upper layer data packets to reduce radio transmission overhead, security by ciphering the data packets, and handover support for UEs between eNBs. The RLC sublayer 512 provides segmentation and reassembly of upper layer data packets, retransmission of lost data packets, and reordering of data packets to compensate for out-of-order reception due to hybrid automatic repeat request (HARQ). The MAC sublayer 510 provides multiplexing between logical and transport channels. The MAC sublayer 510 is also responsible for allocating the various radio resources (e.g., resource blocks) in one cell among the UEs. The MAC sublayer 510 is also responsible for HARQ operations.

In the control plane, the radio protocol architecture for the UE and eNB is substantially the same for the physical layer 506 and the L2 layer 508 with the exception that there is no header compression function for the control plane. The control plane also includes a radio resource control (RRC) sublayer 516 in Layer 3 (L3 layer). The RRC sublayer 516 is responsible for obtaining radio resources (e.g., radio bearers) and for configuring the lower layers using RRC signaling between the eNB and the UE.

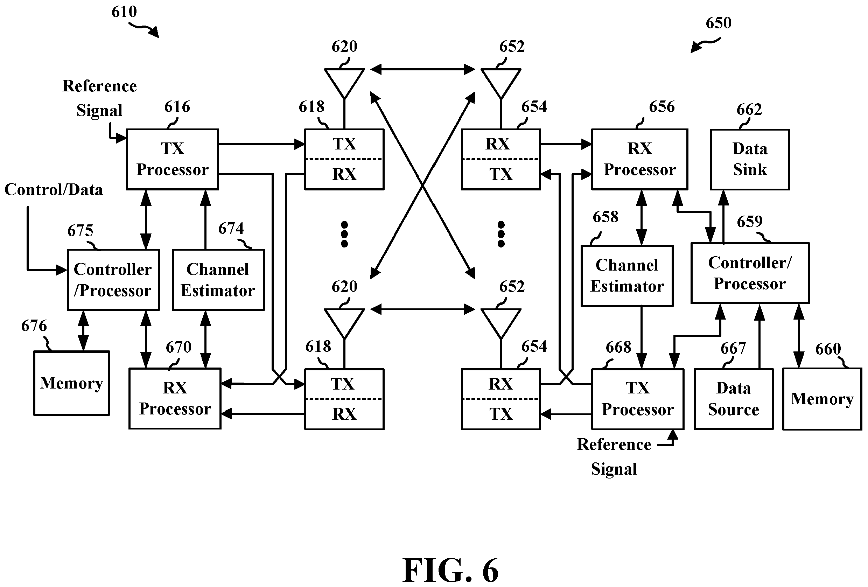

FIG. 6 is a block diagram of an eNB 610 in communication with a UE 650 in an access network. In the DL, upper layer packets from the core network are provided to a controller/processor 675. The controller/processor 675 implements the functionality of the L2 layer. In the DL, the controller/processor 675 provides header compression, ciphering, packet segmentation and reordering, multiplexing between logical and transport channels, and radio resource allocations to the UE 650 based on various priority metrics. The controller/processor 675 is also responsible for HARQ operations, retransmission of lost packets, and signaling to the UE 650.

The transmit (TX) processor 616 implements various signal processing functions for the L1 layer (i.e., physical layer). The signal processing functions include coding and interleaving to facilitate forward error correction (FEC) at the UE 650 and mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM)). The coded and modulated symbols are then split into parallel streams. Each stream is then mapped to an OFDM subcarrier, multiplexed with a reference signal (e.g., pilot) in the time and/or frequency domain, and then combined together using an Inverse Fast Fourier Transform (IFFT) to produce a physical channel carrying a time domain OFDM symbol stream. The OFDM stream is spatially precoded to produce multiple spatial streams. Channel estimates from a channel estimator 674 may be used to determine the coding and modulation scheme, as well as for spatial processing. The channel estimate may be derived from a reference signal and/or channel condition feedback transmitted by the UE 650. Each spatial stream may then be provided to a different antenna 620 via a separate transmitter 618TX. Each transmitter 618TX may modulate an RF carrier with a respective spatial stream for transmission.

At the UE 650, each receiver 654RX receives a signal through its respective antenna 652. Each receiver 654RX recovers information modulated onto an RF carrier and provides the information to the receive (RX) processor 656. The RX processor 656 implements various signal processing functions of the L1 layer. The RX processor 656 may perform spatial processing on the information to recover any spatial streams destined for the UE 650. If multiple spatial streams are destined for the UE 650, they may be combined by the RX processor 656 into a single OFDM symbol stream. The RX processor 656 then converts the OFDM symbol stream from the time-domain to the frequency domain using a Fast Fourier Transform (FFT). The frequency domain signal includes a separate OFDM symbol stream for each subcarrier of the OFDM signal. The symbols on each subcarrier, and the reference signal, are recovered and demodulated by determining the most likely signal constellation points transmitted by the eNB 610. These soft decisions may be based on channel estimates computed by the channel estimator 658. The soft decisions are then decoded and deinterleaved to recover the data and control signals that were originally transmitted by the eNB 610 on the physical channel. The data and control signals are then provided to the controller/processor 659.

The controller/processor 659 implements the L2 layer. The controller/processor can be associated with a memory 660 that stores program codes and data. The memory 660 may be referred to as a computer-readable medium. In the UL, the controller/processor 659 provides demultiplexing between transport and logical channels, packet reassembly, deciphering, header decompression, control signal processing to recover upper layer packets from the core network. The upper layer packets are then provided to a data sink 662, which represents all the protocol layers above the L2 layer. Various control signals may also be provided to the data sink 662 for L3 processing. The controller/processor 659 is also responsible for error detection using an acknowledgement (ACK) and/or negative acknowledgement (NACK) protocol to support HARQ operations.

In the UL, a data source 667 is used to provide upper layer packets to the controller/processor 659. The data source 667 represents all protocol layers above the L2 layer. Similar to the functionality described in connection with the DL transmission by the eNB 610, the controller/processor 659 implements the L2 layer for the user plane and the control plane by providing header compression, ciphering, packet segmentation and reordering, and multiplexing between logical and transport channels based on radio resource allocations by the eNB 610. The controller/processor 659 is also responsible for HARQ operations, retransmission of lost packets, and signaling to the eNB 610.

Channel estimates derived by a channel estimator 658 from a reference signal or feedback transmitted by the eNB 610 may be used by the TX processor 668 to select the appropriate coding and modulation schemes, and to facilitate spatial processing. The spatial streams generated by the TX processor 668 may be provided to different antenna 652 via separate transmitters 654TX. Each transmitter 654TX may modulate an RF carrier with a respective spatial stream for transmission.

The UL transmission is processed at the eNB 610 in a manner similar to that described in connection with the receiver function at the UE 650. Each receiver 618RX receives a signal through its respective antenna 620. Each receiver 618RX recovers information modulated onto an RF carrier and provides the information to a RX processor 670. The RX processor 670 may implement the L1 layer.

The controller/processor 675 implements the L2 layer. The controller/processor 675 can be associated with a memory 676 that stores program codes and data. The memory 676 may be referred to as a computer-readable medium. In the UL, the controller/processor 675 provides demultiplexing between transport and logical channels, packet reassembly, deciphering, header decompression, control signal processing to recover upper layer packets from the UE 650. Upper layer packets from the controller/processor 675 may be provided to the core network. The controller/processor 675 is also responsible for error detection using an ACK and/or NACK protocol to support HARQ operations.

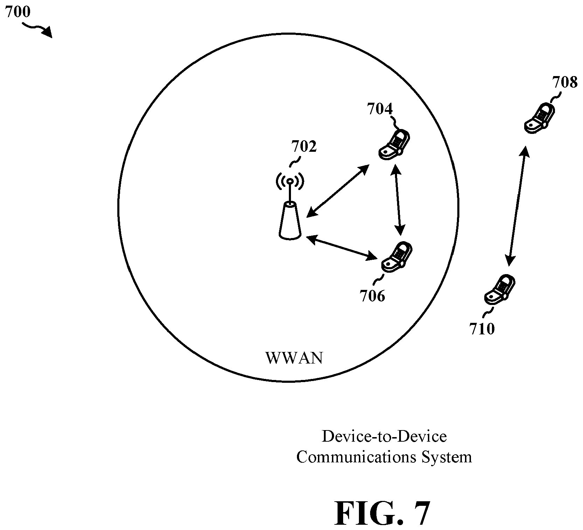

FIG. 7 is a diagram of a device-to-device communications system 700. The device-to-device communications system 700 includes a plurality of wireless devices 704, 706, 708, 710. The device-to-device communications system 700 may overlap with a cellular communications system, such as for example, a wireless wide area network (WWAN). Some of the wireless devices 704, 706, 708, 710 may communicate together in device-to-device communication using the DL/UL WWAN spectrum, some may communicate with the base station 702, and some may do both. For example, as shown in FIG. 7, the wireless devices 708, 710 are in device-to-device communication and the wireless devices 704, 706 are in device-to-device communication. The wireless devices 704, 706 are also communicating with the base station 702.

The exemplary methods and apparatuses discussed *infra* are applicable to any of a variety of wireless device-to-device communications systems, such as for example, a wireless device-to-device communication system based on FlashLinQ, WiMedia, Bluetooth, ZigBee, or Wi-Fi based on the IEEE 802.11 standard. To simplify the discussion, the exemplary methods and apparatus are discussed within the context of LTE. However, one of ordinary skill in the art would understand that the exemplary methods and apparatuses are applicable more generally to a variety of other wireless device-to-device communication systems.

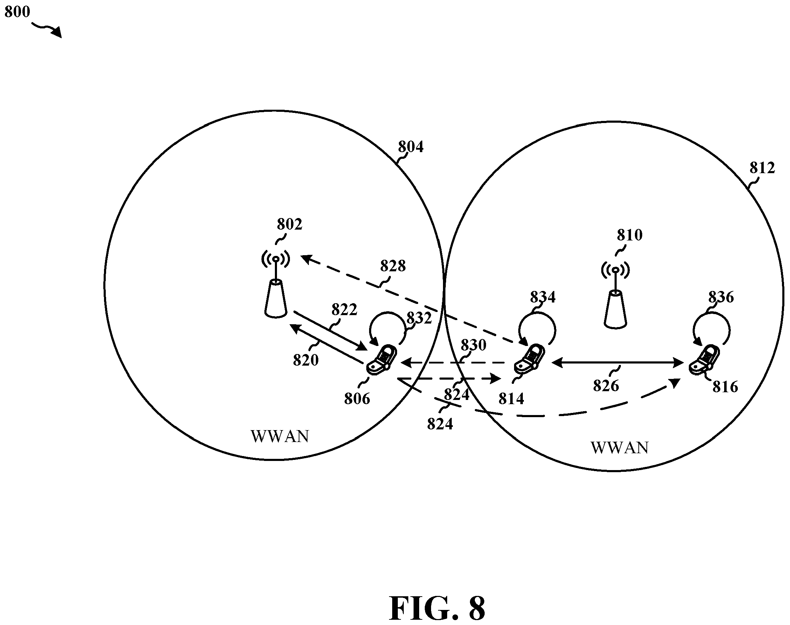

FIG. 8 is a diagram illustrating a communications system 800 having a device-to-device (D2D) network coexisting with a WWAN. The WWAN network includes, but is not limited to, a base station 802 and a first wireless device 806, which may also be known as a mobile station, UE, or the like. The base station 802 may provide a cell 804 on which the first wireless device 806 may operate. In so doing, the base station 802 and the wireless device 806 may communicate together using the DL/UL WWAN spectrum. In one aspect, the base station 802 configures resources on which the wireless device 806 is to transmit an uplink signal 820. For example, the base station 802 may transmit a downlink signal 822 on resources corresponding to a physical downlink control channel (PDCCH) to schedule user data to be transmitted, by the wireless device 806, in the uplink signal 820 on resources corresponding to a PUSCH.

The D2D network includes, but is not limited to, a plurality of wireless devices 814, 816, at least one of which may also be known as a mobile station, UE, or the like. The wireless devices 814, 816 may form at least a part of a D2D network. The D2D network may overlap with a cellular communications system, such as a WWAN in which a base station 810 provides a cell 812 on which the wireless devices 814, 816 may operate. However, the base station 810 may be absent in some aspects, such as where the wireless devices 814, 816 are not operating on a cell (e.g., the wireless devices 814, 816 may be out of a coverage area). The wireless devices 814, 816 may communicate together in D2D communication using the DL/UL WWAN spectrum or another spectrum (e.g., an unlicensed spectrum). In one aspect, the base station 810 configures resources on which the wireless devices 814, 816 are to communicate in the D2D network.

The D2D communication between the wireless devices 814, 816 may include a discovery process between the wireless devices 814, 816. For example, an advertising wireless device 814 may broadcast a discovery signal and, upon detection of the discovery signal, a monitoring wireless device 816 may transmit a response to the advertising wireless device 814, for example, to synchronize and/or to establish timing information for facilitation of D2D communication between the advertising wireless device 814 and the monitoring wireless device 816.

For coexistence of a D2D network and WWAN in the communications system 800, adaptive power control by one or more of the wireless devices 806, 814, 816 may mitigate interference to another one of the wireless devices 806, 814, 816 and/or one of the base stations 802, 810. In one example, inter-cell interference may occur where a first wireless device 806 transmits an uplink signal 820 to the base station 802 when D2D transmission is occurring between a second wireless device 814 and a third wireless device 816, for example, in the neighboring cell 812. That is, the uplink signal 820 may introduce interference 824 to a D2D signal 826 (e.g., a discovery signal) communicated between the second wireless device 814 and the third wireless device 816. As such, the uplink signal 820 may cause interference 824 to the wireless device 814. Similarly, a D2D signal 826 may introduce interference 828 to the uplink signal 820 between the wireless device 806 and the base station 802. As such, the D2D signal 826 may cause interference 828 to the base station 802. Similarly, a D2D signal 826 may introduce interference 830 to the downlink signal 822 between the wireless device 806 and the base station 802. As such, the D2D signal 826 may cause interference 830 to the first wireless device 806.

In an exemplary aspect, one or more resources of a same subframe configured for the D2D signal 826 may overlap with resources configured for the uplink signal 820. For example, the uplink signal 820 may be carried on resources that correspond to a PUCCH/PUSCH and, concurrently, the D2D signal 826 may be carried on resources that overlap with the PUCCH/PUSCH in the neighboring cell 804. When the second wireless device 814 is proximate to a boundary of a first cell 804 in which the uplink signal 820 is transmitted, the uplink signal 820 of the first wireless device 806 may introduce interference 824 to the D2D signal 826 communicated between the second wireless device 814 and the third wireless device 816, resulting in loss of data to the receiving wireless device (e.g., the second wireless device 814) from the transmitting wireless device (e.g., the third wireless device 816). Similarly, the D2D signal 826 communicated between the second wireless device 814 and the third wireless device 816 may introduce interference 828 to the uplink signal 820 communicated between the first wireless device 806 and the base station 802 when the uplink signal 820 is transmitted on resources that overlap with resources carrying the D2D signal 826. Also, the D2D signal 826 communicated between the second wireless device 814 and the third wireless device 816 may introduce interference 830 to the downlink signal 822 communicated between the first wireless device 806 and the base station 802 when the downlink signal 822 is transmitted on resources (e.g., physical downlink control channel (PDCCH) and/or physical downlink shared channel (PDSCH)) that overlap with resources carrying the D2D signal 826.

To mitigate interference, one or more of the wireless devices 806, 814, 816 may be configured to control transmission power of respective transmitted signals 820, 826. Transmission power control may balance requirements for sufficient transmitted energy per bit to maintain the link quality corresponding to the required Quality-of-Service (QoS) with minimization of interference to other wireless devices. Approaches to power control of transmission disclosed herein may mitigate interference occurring in subframe(s) and/or subcarrier(s) and may be applicable for aspects in which the communications system 800 is a TDD network or an FDD network.

According to aspects, each of the wireless devices 806, 814, 816 controls its respective transmission power based on a power control algorithm. One of the wireless devices 806, 814, 816 computes at least one value to control its respective transmission power based on a plurality of parameters associated with the power control algorithm. Power control algorithms may be defined by one or more standards associated with WWAN and/or D2D communication, such as one or more 3GPP technical specifications. The first wireless device 806 may utilize a power control algorithm for WWAN communication, and may in fact utilize different power control algorithms depending upon a type of communication (e.g., data or control) and/or a type of wireless channel. Similarly, the second wireless device 814 and the third wireless device 816 may utilize a power control algorithm for D2D communication, and may utilize different power control algorithms depending upon a type of communication (e.g., data or control) and/or a type of wireless channel. It should be appreciated that the first wireless device 806 may be capable of D2D operations described herein with respect to the second and third wireless devices 814, 816, and, likewise, the second wireless device 814 and/or the third wireless device 816 may be capable of WWAN operations described herein with respect to the first wireless device 806.

While closed-loop parameters may be associated with a power control scheme employed by at least one of the wireless devices 806, 814, 816, closed-loop feedback may compensate for situations in which one of the wireless devices 806, 814, 816 estimates its own respective power setting and finds that respective power setting to be unsatisfactory and, therefore, closed-loop parameters are not considered by power control mechanisms of the present disclosure.

In a power control scheme of the present disclosure, at least one of the wireless devices 806, 814, 816 may control a respective transmission power based on a plurality of open-loop power control parameters. A first of these open-loop power control parameters may be a semi-static base power level Po and a second of these open-loop power control parameters may be a path-loss compensation component α. According to various aspects, the semi-static base power level Po may be either specific to each of the wireless devices 806, 814, 816 or specific to one of the cells 804, 812 in which the wireless devices 806, 814, 816, whereas the path-loss compensation component α may be specific to each one of the wireless devices 806, 814, 816. In other aspects, at least one of the wireless devices 806, 814, 816 may control its respective transmission power based on different and/or additional open-loop power control parameters and, therefore, Po and α are to be regarded as illustrative.

According to an aspect, one or more of the sets of open-loop power control parameters may be signaled to the wireless devices 806, 814, 816. For example, the first base station 802 may signal one or more sets of open-loop power control parameters to the first wireless device 806 using a System Information Block (SIB), RRC signaling, or other dedicated signaling. Similarly, the second base station 810 may signal one or more of the sets of open-loop power control parameters to the second and third wireless devices 814, 816.

In an aspect, at least one of the wireless devices 806, 814, 816 may have two different sets of open-loop power control parameters - e.g., [P₀, α]₀ and [P₀, α]₁. The two sets of open-loop power control parameters [P₀, α]₀ and [P₀, α]₁ may be employed by at least one of the wireless devices 806, 814, 816 based on at least one transmission condition associated with transmission over a wireless channel by the at least one of the wireless devices 806, 814, 816. In various aspects, one or more sets of open-loop power control parameters may have one or more values in common with one another.

At least one set of the open-loop power control parameters (e.g., [P₀, α]₀) may be considered as a set of open-loop power control parameters for a transmission condition in which interference does not necessitate adaptive power control. This first set of open-loop power control parameters (e.g., [P₀, α]₀) may be considered a default set of open-loop power control parameters. For example, the first wireless device 806 may use such a first set of open-loop power control parameters when resources on which the first wireless device 806 is to communicate do not overlap with resources on which the second and third wireless devices 814, 816 are to communicate.

According to various aspects, a first set of open-loop power control parameters (e.g., [P₀, α]₀) may be employed by at least one of the wireless devices 806, 814, 816 where that one of the wireless devices 806, 814, 816 detects a transmission condition that indicates interference is unlikely and/or insignificant. For example, the first wireless device 806 may determine the transmission condition based on an indication that resources allocated for uplink and/or downlink transmissions are not concurrent/not overlapping with resources allocated for D2D communication, such as the D2D signal 826. The first wireless device 806 may receive this indication, such as from the base station 802 (which may receive resource and/or subframe allocation information from the neighboring base station 810 through backhaul and/or the X2 interface).

In an aspect, the first wireless device 806 may determine the transmission condition by detecting for interference, for example, during unused resources (e.g., open subframes) when the first wireless device 806 is not transmitting and/or receiving. Where the first wireless device 806 does not detect interference 830, the first wireless device 806 may perform a selection operation 832 to select a first set of open-loop power control parameters [P₀, α]₀ (e.g., a default set of open-loop power control parameters). Accordingly, the first wireless device 806 may use the selected first set of open-loop power control parameters [P₀, α]₀ to compute power for transmission of the uplink signal 820 to the base station 802.

In another aspect, the first wireless device 806 may detect interference 830 and measure the energy (or power) of interference 830. The first wireless device 806 may compare the measured energy to a threshold, and if the measured energy does not meet or exceed the threshold, then the first wireless device 806 may perform the selection operation 832 to select the first set of open-loop power control parameters [P₀, α]₀ (e.g., a default set of open-loop power control parameters). Accordingly, the first wireless device 806 may use the selected first set of open-loop power control parameters [P₀, α]₀ to compute power for transmission of the uplink signal 820 to the base station 802.

However, if the first wireless device 806 determines that the measured energy exceeds the threshold (or, in an alternative configuration, meets the threshold), then the first wireless device 806 may determine that the transmission condition calls for a second set of open-loop power control parameters [P₀, α]₁ to be used to compute power for transmission of the uplink signal 820 to the base station 802. Therefore, the first wireless device 806 may perform the selection operation 832 to select a second set of open-loop power control parameters [P₀, α]₁. Accordingly, the first wireless device 806 may use the selected second set of open-loop power control parameters [P₀, α]₁ to compute power for transmission of the uplink signal 820 to the base station 802.

Similarly, the second wireless device 814 may determine a transmission condition by detecting for interference, for example, during unused resources (e.g., open subframes) when the second wireless device 814 is not transmitting and/or receiving. Where the second wireless device 814 does not detect interference 824, the second wireless device 814 may perform a selection operation 834 to select a first set of open-loop power control parameters [P₀, α]₀ (e.g., a default set of open-loop power control parameters). Accordingly, the second wireless device 814 may use the selected first set of open-loop power control parameters [P₀, α]₀ to compute power for transmission of the D2D signal 826.

In another aspect, the second wireless device 814 may detect interference 824 and measure energy (or power) of interference 824. The second wireless device 814 may compare the measured energy to a threshold, and if the measured energy does not meet or exceed the threshold, then the second wireless device 814 may perform the selection operation 834 to select the first set of open-loop power control parameters [P₀, α]₀ (e.g., a default set of open-loop power control parameters). Accordingly, the second wireless device 814 may use the selected first set of open-loop power control parameters [P₀, α]₀ to compute power for transmission of the D2D signal 826.

However, if the second wireless device 814 determines that the measured energy exceeds the threshold (or, in an alternative configuration, meets the threshold), then the second wireless device 814 may determine that the transmission condition calls for a second set of open-loop power control parameters [P₀, α]₁ to be used to compute power for transmission of the D2D signal 826. Therefore, the second wireless device 814 may perform the selection operation 834 to select a second set of open-loop power control parameters [P₀, α]₁. Accordingly, the second wireless device 814 may use the selected second set of open-loop power control parameters [P₀, α]₁ to compute power for transmission of the D2D signal 826.

According to various aspects, the third wireless device 816 may select a first set of open-loop power control parameters [P₀, α]₀ (e.g., a default set of open-loop power control parameters) in a manner similar to that described with respect to the second wireless device 814. For example, the third wireless device 816 may detect a transmission condition based on measuring energy of interference 824 and comparing the measured energy to a threshold.

At least one of the wireless devices 806, 814, 816 may have a plurality of sets of open-loop power control parameters - e.g., [P₀, α]₀, ... , [P₀, α]_{N}, where N is greater than or equal to 1. Each set of open-loop power control parameters [P₀, α]₀, ... , [P₀, α]_{N} may be employed by at least one of the wireless devices 806, 814, 816 based on at least one transmission condition associated with transmission over a wireless channel by the at least one of the wireless devices 806, 814, 816.

For example, a second set of open-loop power control parameters (e.g., [P₀, α]₁) may be employed by at least one of the wireless devices 806, 814, 816 for a transmission condition in which one of the wireless devices 806, 814, 816 is likely to cause interference to another signal. In an aspect, the second set of open-loop power control parameters may cause one of the wireless devices 806, 814, 816 to reduce transmission power.

Alternatively or in addition to the second set, one of the wireless devices 806, 814, 816 may have a third set of open-loop power control parameters (e.g., [P₀, α]₂). The third set of open-loop power control parameters may be employed by at least one of the wireless devices 806, 814, 816 for a transmission condition in which the receiving side (e.g., the base station 802, the second wireless device 814, or the third wireless device 816) of a signal transmitted by the one of the wireless devices 806, 814, 816 is likely to experience interference. For example, the third set of open-loop power control parameters may cause one of the wireless devices 806, 814, 816 to increase transmission power.

By way of illustration, the first wireless device 806 may determine that the first wireless device 806 may cause interference to D2D communication (e.g., D2D discovery) between the second and third wireless devices 814, 816 based on an indication that resources allocated for uplink transmissions may overlap with resources allocated for D2D communication. The first wireless device 806 may receive this indication, such as from the base station 802 (which may receive resource and/or subframe allocation information from the neighboring base station 810 through backhaul and/or the X2 interface).

In an aspect, the first wireless device 806 may detect for interference, for example, during unused resources (e.g., open subframes) when the first wireless device 806 is not transmitting and/or receiving. Where the first wireless device 806 detects interference 830, the first wireless device 806 may measure energy of the interference 830 and compare the measured energy to a threshold.

Based on the comparison, the first wireless device 806 may determine a transmission condition in which the first wireless device 806 may cause interference to the D2D signal 826, such as when the third wireless device 816 broadcasts a D2D discovery signal that the second wireless device 814 may detect. For example, when energy of interference 830 from the D2D signal 826 meets or exceeds a threshold, the first wireless device 806 may determine that the uplink signal 820 would likely cause interference 824 to the second wireless device 814 when receiving the D2D signal 826 from the third wireless device 816. In response, the first wireless device 806 may perform the selection operation 832 to select a set of open-loop power control parameters stored therein (e.g., a second set [P₀, α]₁ that is different from a default set [P₀, α]₀). Accordingly, the first wireless device 806 may compute a reduced transmission power using the selected set of open-loop power control parameters to mitigate interference 824 to the second wireless device 814 and may transmit the uplink signal 820 with the reduced transmission power.

It should be understood that while aspects of the present disclosure describe interference 828, 830 as originating from a D2D signal 826, similar operations may be performed by the first wireless device 806 when interference is detected from a WWAN signal in the neighboring cell 812. For example, resources carrying the uplink signal 820 from the first wireless device 806 may overlap with resources carrying an uplink signal from the second wireless device 814 to the neighboring base station 810 in the neighboring cell 812, and the first wireless device 806 may detect this transmission condition and perform the selection operation 832 to mitigate interference from the uplink signal in the neighboring cell 812.

In another illustrative aspect, the second wireless device 814 may determine that the D2D signal 826 may cause interference 830 to the first wireless device 806 and/or may cause interference 828 to the base station 802 based on an indication that resources allocated for D2D communication may overlap with resources allocated for uplink and/or downlink transmissions, such as the uplink and/or downlink signals 820, 822 in the neighboring cell 804. The second wireless device 814 may receive this indication, such as from the base station 810 (which may receive resource and/or subframe allocation information from the neighboring base station 802 through backhaul and/or the X2 interface).

In an aspect, the second wireless device 814 may detect for interference, for example, during unused resources (e.g., open subframes) when the second wireless device 814 is not transmitting and/or receiving. Where the second wireless device 814 detects interference 824, the second wireless device 814 may measure energy of interference 824 and compare the measured energy to a threshold.

Based on comparison of the measured energy to the threshold, the second wireless device 814 may determine a transmission condition in which the D2D signal 826 may interfere with a receiver, such as the first wireless device 806 and/or the base station 802 of the neighboring cell 804. When the measured energy of interference 824 from the uplink and/or downlink signals 820, 822 meets or exceeds a threshold, the second wireless device 814 may determine that the D2D signal 826 would likely cause interference 830 to the first wireless device 806 when receiving the downlink signal 822 and/or would likely cause interference 828 to the base station 802 when receiving the uplink signal 820. In response to the determined transmission condition, the second wireless device 814 may perform a selection operation 834 to select a set of open-loop power control parameters (e.g., a second set [P₀, α]₁ that is different from a default set [P₀, α]₀). The selected set of open-loop power control parameters may decrease transmission power of the D2D signal 826 to mitigate interference to a receiver (e.g., the first wireless device 806 and/or the base station 802). Accordingly, the second wireless device 814 may compute a reduced transmission power using the selected set of open-loop power control parameters and may transmit the D2D signal 826 with the decreased transmission power.

In another illustrative aspect, the third wireless device 816 may determine that the D2D signal 826 (e.g., a D2D discovery signal) transmitted by the third wireless device 816 may experience interference at a receiving side (e.g., the second wireless device 814) based on an indication that resources allocated for D2D communication may overlap with resources allocated for uplink and/or downlink transmissions, such as the uplink and/or downlink signals 820, 822 in the neighboring cell 804. The third wireless device 816 may receive this indication, such as from the base station 810 (which may receive resource and/or subframe allocation information from the neighboring base station 802 through backhaul and/or the X2 interface).

In an aspect, the third wireless device 816 may detect for interference, for example, during unused resources (e.g., open subframes) when the third wireless device 816 is not transmitting and/or receiving. Where the third wireless device 816 detects interference 824, the third wireless device 816 may measure energy of interference 824 and compare the measured energy to a threshold.

Based on comparison of the measured energy to the threshold, the third wireless device 816 may determine a transmission condition in which a receiving side (e.g., the second wireless device 814) may experience interference when receiving the D2D signal 826. For example, interference 824 may prevent D2D discovery of the third wireless device 816. In response to the determined transmission condition, the third wireless device 816 may perform a selection operation 836 to select a set of open-loop power control parameters (e.g., a second set [P₀, α]₁ that is different from a default set [P₀, α]₀). The selected set of open-loop power control parameters may increase transmission power of the D2D signal 826 to improve reception and/or decoding of the D2D signal 826 by the second wireless device 814 (e.g., when the second wireless device 814 is monitoring for D2D discovery signals). Accordingly, the third wireless device 816 may compute an increased transmission power using the selected set of open-loop power control parameters and may transmit the D2D signal 826 with the increased transmission power.

It should be understood that while aspects of the present disclosure describe interference 824 as originating from uplink and/or downlink signals 820, 822 in WWAN, similar operations may be performed by the second wireless device 814 and/or the third wireless device 816 when interference is detected from a D2D signal, such as a D2D signal in the neighboring cell 804. For example, resources carrying the D2D signal 826 may overlap with resources carrying another D2D signal from the first wireless device 806, and the second wireless device 814 may detect this transmission condition and perform the selection operation 834 to mitigate interference from the other D2D signal.

According to various aspects, a respective selection operation 832, 834, 836 performed by a respective wireless device 806, 814, 816 may be a function of detected interference. As described in the present disclosure, at least one of the wireless devices 806, 814, 816 may have a plurality of sets of open-loop power control parameters. According to an aspect, a respective wireless device 806, 814, 816 may perform a respective selection operation 832, 834, 836 to select a set of open-loop power control parameters corresponding to a measured energy of interference. In effect, at least one of the wireless devices 806, 814, 816 may incrementally adjust transmission power so that the transmission power is commensurate with a measured energy of interference.

In an illustrative aspect, at least one of the wireless devices 806, 814, 816 may have a plurality of thresholds to which the one of the wireless devices 806, 814, 816 may compare measured energy of interference. That is, the one of the wireless devices 806, 814, 816 may measure energy of interference that meets or exceeds a first threshold but does not meet or exceed a second threshold. Accordingly, the one of the wireless devices 806, 814, 816 may select a set of open-loop power control parameters that corresponds to the measured energy, for example, so that the one of the wireless devices 806, 814, 816 does not unsatisfactorily increase or decrease transmission power.

For example, the first wireless device 806 may measure different energies for interference 830 depending upon whether the D2D signal 826 is transmitted by the second wireless device 814 or the third wireless device 816 (e.g., the first wireless device 806 may be closer to the second wireless device 814 than the third wireless device 816). As described *supra,* the first wireless device 806 may measure the energy of interference 830 and may compare the measured energy to a threshold. Although in a further aspect, the first wireless device 806 may compare the measured energy to a plurality of thresholds. Where the first wireless device 806 determines that the measured energy meets or exceeds a first threshold but does not meet or exceed a second threshold, then the first wireless device 806 may perform the selection operation 832 to select a set of open-loop power control parameters corresponding to measured energy that meets or exceeds the first threshold and not the second threshold. Accordingly, the first wireless device 806 may use the selected set of open-loop power control parameters to compute power for transmission of the uplink signal 820 to the base station 802. For example, the first wireless device 806 may select a set of open-loop power control parameters that decreases power used for transmission of the uplink signal 820 to mitigate interference 824 but does not decrease transmission power to a level that the base station 802 is unable to receive and decode the uplink signal 820.

In another example, the second wireless device 814 may measure different energies for interference 824 depending upon whether the uplink signal 820 or the downlink signal 822 causes interference 824 (e.g., signals from the first wireless device 806 may have greater energy than signals from the base station 802, as measured at the second wireless device 814). As described *supra,* the second wireless device 814 may measure energy of interference 824 and may compare the measured energy to a threshold. Although in a further aspect, the second wireless device 814 may compare the measured energy to a plurality of thresholds. Where the second wireless device 814 determines that the measured energy meets or exceeds a first threshold but does not meet or exceed a second threshold, then the second wireless device 814 may perform the selection operation 834 to select a set of open-loop power control parameters corresponding to measured energy that meets or exceeds the first threshold and not the second threshold. Accordingly, the second wireless device 814 may use the selected set of open-loop power control parameters to compute power for transmission of the D2D signal 826. For example, the second wireless device 814 may select a set of open-loop power control parameters that increases power used for transmission of the D2D signal 826 so that the third wireless device 816 may receive and decode the D2D signal 826, but the selected set of open-loop power control parameters may not cause an increase in transmission power used for the D2D signal 826 to the point that the D2D signal 826 would unacceptably interfere with the uplink signal 820 and/or the downlink signal 822.

It should be understood that while aspects of the present disclosure describe two thresholds, at least one of the wireless devices 806, 814, 816 may have any number of thresholds, as well as any number of sets of open-loop power control parameters. For example, at least one of the wireless devices 806, 814, 816 may have a first threshold corresponding to selection of a default set of open-loop power control parameters, a second threshold corresponding to selection of a set of open-loop power control parameters that causes a smaller increase in transmission power, a third threshold corresponding to selection of a set of open-loop power control parameters that causes a greater increase in transmission power, a fourth threshold corresponding to selection of a set of open-loop power control parameters that causes a smaller decrease in transmission power, a fifth threshold corresponding to selection of a set of open-loop power control parameters that causes a greater decrease in transmission power, and so forth.

The present disclose may reference a discrete amount of open-loop power control parameters; however, such amounts are to be regarded as illustrative and wireless devices 806, 814, 816 may each have different numbers of open-loop power control parameters - e.g., a respective one of the wireless devices 806, 814, 816 may have sets of open-loop power control parameters for a plurality of channels to be used where interference does not necessitate adaptive power control, sets of open-loop power control parameters for a plurality of channels to be used where interference does necessitate adaptive power control when the respective one of the wireless devices 806, 814, 816 is communicating on WWAN, sets of open-loop power control parameters for a plurality of channels to be used where interference does necessitate adaptive power control when the respective one of the wireless devices 806, 814, 816 is communicating in D2D, and so forth.

According to an aspect, at least one of the wireless devices 806, 814, 816 may have different sets of open-loop power control parameters to be employed for resources that correspond to or overlap with different wireless channels. For example, at least one of the wireless devices 806, 814, 816 may have a first set of open-loop power control parameters to control transmission power of signals carried on resources that correspond to or overlap with a PUSCH and a second set of open-loop power control parameters to control transmission power of signals carried on resources that correspond to or overlap with a PUCCH.

In an aspect, the wireless devices 806 of the WWAN may select different sets of open-loop power control parameters for resources that correspond to or overlap with different wireless channels associated with WWAN communication. For example, where the uplink signal 820 is a control or data signal, the first wireless device 806 may transmit control information on resources corresponding to a PUCCH and/or may transmit data on resources corresponding to a PUSCH, respectively. The first wireless device 806 may have a first set of open-loop power control parameters to control transmission power of signals carried on resources that correspond to a PUCCH and a second set of open-loop power control parameters to control transmission power of signals carried on resources that correspond to a PUSCH.

In another aspect, at least one of the wireless devices 814, 816 of the D2D network may select different sets of open-loop power control parameters for resources that correspond to or overlap with different wireless channels associated with D2D communication. For example, where the D2D signal 826 is a control or data signal (e.g., following a D2D discovery process), the transmitting device (e.g., the second wireless device 814 or the third wireless device 816) may transmit control information on resources corresponding to a physical sidelink control channel (PSCCH) and/or may transmit data on resources corresponding to a physical sidelink shared channel (PSSCH), respectively. At least one of the wireless devices 814, 816 of the D2D network may have a first set of open-loop power control parameters to control transmission power of signals carried on resources that correspond to a PSCCH and a second set of open-loop power control parameters to control transmission power of signals carried on resources that correspond to a PSSCH.

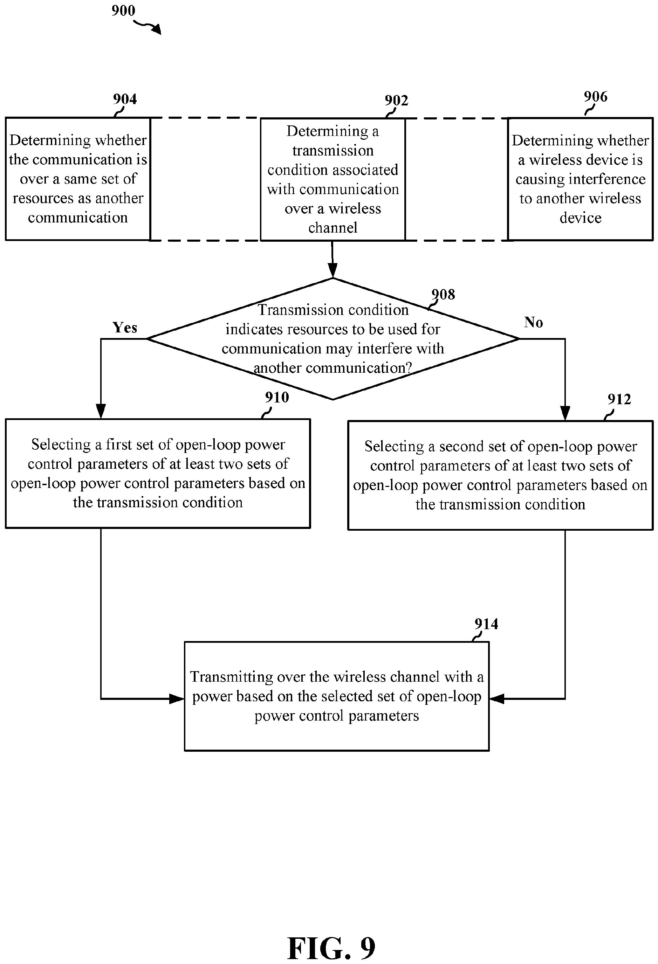

FIG. 9 flowchart illustrating a method for power control in a device-to-device and/or wireless wide area network. The method 900 may be performed by a wireless device, such as one of the wireless devices 806, 814, 816 of FIG. 8.

FIG. 9 may begin with an operation 902 at which a wireless device is to determine a transmission condition associated with communication over a wireless channel. In one aspect, the wireless device may receive an indication of resources to be used for another communication, for example, in a neighboring cell. In an additional aspect, the wireless device may detect for interference, for example, on those resources indicated to be used for another communication.

In one aspect, operation 902 may include an aspect of operation 904. In an aspect of operation 904, the wireless device may determine whether communication by the wireless device is over a same set of resources as another communication. For example, the transmission condition may be associated with a D2D communication conducted by another wireless device using a same set of resources as the wireless device. In the context of FIG. 8, a first wireless device 806 may receive an indication of resources to be used for the D2D signal 826 in the neighboring cell 812.

In another aspect of operation 904, the transmission condition may be associated with an allocation of WWAN resources of a neighboring base station. In the context of FIG. 8, one of the wireless devices 814, 816 may receive an indication of resources to be used for the uplink signal 820 and/or the downlink signal 822 in the neighboring cell 804.

An aspect of operation 902 may include operation 906. In an aspect of operation 906, the wireless device may determine whether it is causing interference to another wireless device (or that a signal transmitted by the wireless device may be interfered with). In an aspect of operation 906, the first wireless device 806 of FIG. 8 may detect interference 830 from D2D signal 826. For example, the first wireless device 806 may detect interference during open resources during which the first wireless device 806 is not transmitting or receiving. The first wireless device 806 may compare energy (or power) of detected interference to a threshold to determine the transmission condition.

In another aspect of operation 906, one of the wireless devices 814, 816 may detect interference 824 from the uplink signal 820 and/or the downlink signal 822. For example, one of the wireless devices 814, 816 may measure energy (or power) of interference during open resources during which that one of the wireless devices 814, 816 is not transmitting or receiving. The one of the wireless devices 814, 816 may compare energy (or power) of measured interference to a threshold to determine the transmission condition.

Proceeding to operation 908, the wireless device may determine if the transmission condition indicates that resources to be used for communication by the wireless device may interfere with another communication. In one aspect, the wireless device may determine that the transmission condition indicates that resources to be used by the wireless device for communication may interfere with another communication based on an indication of resources to be used for the other communication. The wireless device may determine that communication by the wireless device may interfere with the other communication if resources allocated for the communication by the wireless device are also indicated to be allocated for the other communication.

In the context of FIG. 8, the first wireless device 806 may receive an indication that D2D communication is to occur in the neighboring cell 812, for example, on the same resources that the first wireless device 806 is to use for the uplink signal 820. In a further aspect, the first wireless device 806 may determine if the measured interference meets or exceeds a threshold amount that indicates if the uplink signal 820 may introduce interference 824 to the D2D signal 826. If the measured interference meets or exceeds the threshold, the first wireless device 806 may determine that the uplink signal 820 may introduce interference 824 to the D2D signal 826. Otherwise, the first wireless device 806 may determine that the uplink signal 820 is unlikely to introduce interference 824 to the D2D signal 826.

Alternatively, the second or third wireless device 814, 816 may receive an indication that D2D communication is to occur in the neighboring cell 804, for example, on the same resources that the second and third wireless devices 814, 816 are to use for the D2D signal 826. In an aspect, the second or third wireless device 814, 816 may determine if the measured interference meets or exceeds a threshold amount that indicates if the D2D signal 826 may introduce interference 830 to the uplink signal 820 and/or the downlink signal 822 and/or may be interfered with by the uplink signal 820 and/or the downlink signal 822. However, if the measured interference does not exceed the threshold (or meet the threshold, in another aspect), then the second or third wireless device 814, 816 may determine that it is unlikely that the D2D signal 826 would introduce interference 828 to the uplink signal 820 and/or interference 830 to the downlink signal 822 and/or may be interfered with by the uplink signal 820 and/or the downlink signal 822.

If the wireless device determines that the transmission condition indicates that the communication by the wireless device is likely to interfere with the other communication, then the wireless device may proceed to operation 910. At operation 910, the wireless device may select a first set of open-loop power control parameters based on the transmission condition. The first set of open-loop power control parameters may be used by the wireless device to control transmission power based on a power control algorithm. For example, the first set of open-loop power control parameters may cause the wireless device to increase or decrease transmission power of the wireless device.

In the context of FIG. 8, the first wireless device may perform selection operation 832 to select a first set of open-loop power control parameters, for example, that is different from a default set. Also in the context of FIG. 8, the second wireless device 814 may perform the selection operation 834 to select a first set of open-loop power control parameters, for example, that is different from a default set. Similarly, the third wireless device 816 may perform the selection operation 836 to select a first set of open-loop power control parameters, for example, that is different from a default set.

If the wireless device determines that the transmission condition indicates that it is unlikely the communication by the wireless device would interfere with the other communication, then the wireless device may proceed to operation 912. At operation 912, the wireless device may select a second set of open-loop power control parameters based on the transmission condition. The second set of open-loop power control parameters may be used by the wireless device to control transmission power based on a power control algorithm. For example, the first set of open-loop power control parameters may cause the wireless device to set transmission power of the wireless device to a default level.

In the context of FIG. 8, the first wireless device may perform selection operation 832 to select a second set of open-loop power control parameters, for example, a default set. Also in the context of FIG. 8, the second wireless device 814 may perform the selection operation 834 to select a second set of open-loop power control parameters, for example, a default set. Similarly, the third wireless device 816 may perform the selection operation 836 to select a second set of open-loop power control parameters, for example, a default set.

At operation 914, the wireless device may transmit over a wireless channel with a power based on the selected set of open-loop power control parameters. For example, the wireless device may compute transmission power using a power control algorithm that takes into account the selected set of open-loop power control parameters.

In the context of FIG. 8, the first wireless device 806 may calculate transmission power using the selected set of open-loop power control parameters and transmit the uplink signal 820 according to the selected set. Also in the context of FIG. 8, the second wireless device 814 or the third wireless device 816 may calculate transmission power using the selected set of open-loop power control parameters and transmit the D2D signal 826 according to the selected set.

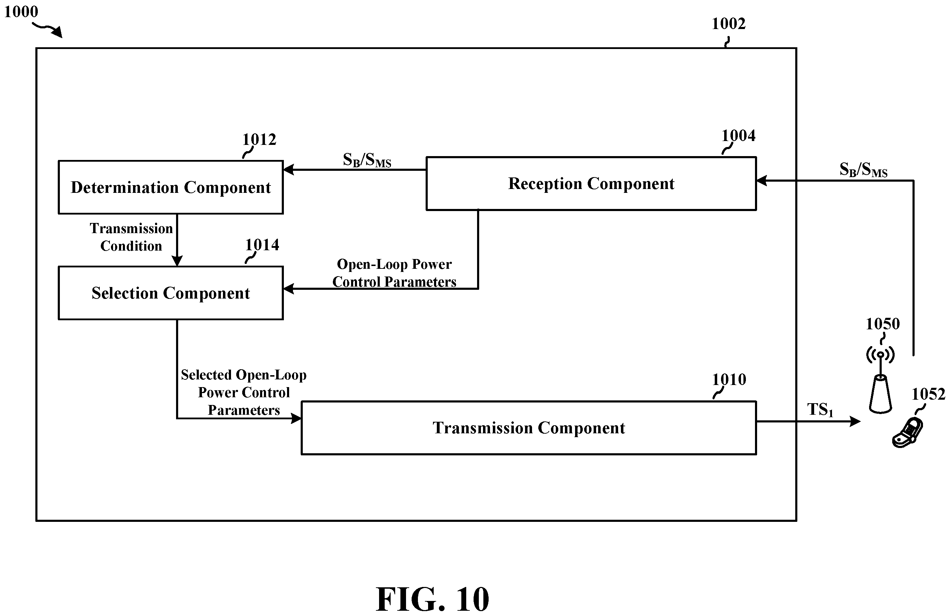

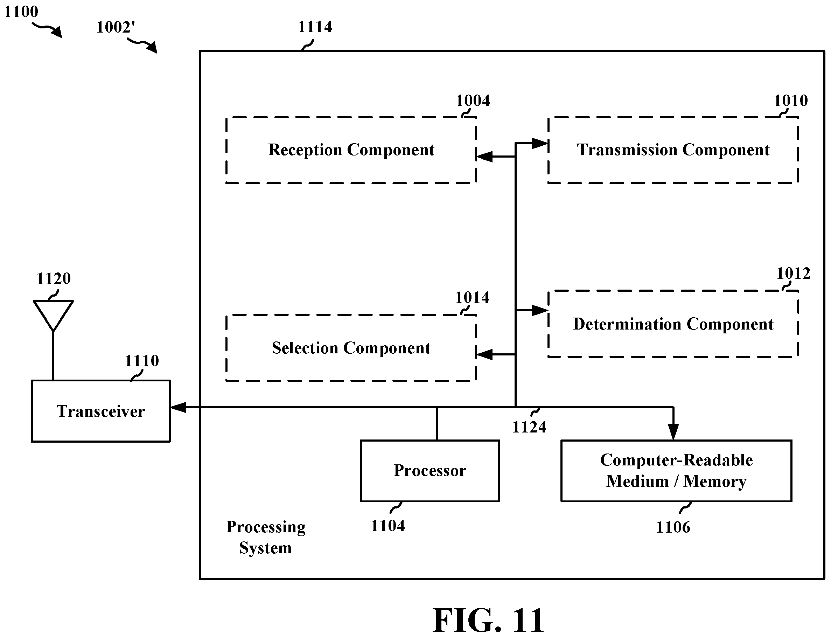

FIG. 10 is conceptual data flow diagram 1000 illustrating the data flow between different modules/means/components in an exemplary apparatus 1002. The method may be performed by a wireless device (e.g., such as one of the wireless devices 806, 814, 816 of FIG. 8, the apparatus 1102/1102' of FIG. 11, etc.). The apparatus 1002 depicts exemplary connections and/or data between different modules/means/components. It is to be understood that such connections and/or data flow are to be regarded in as illustrative and, therefore, different and/or additional connections and/or data flow may be present in different aspects.

The apparatus 1002 may include a reception component 1004. The reception component 1004 may receive signals from a base station and/or a wireless device (e.g., the base station 1050 and/or the wireless device 1052). In an aspect, the reception component 1004 may receive one or more open-loop power control parameters, for example, from the base station 1050. In another aspect, the reception component 1004 may receive an indication of resources to be used by another wireless device (e.g., the wireless device 1052) for another communication. In another aspect, the reception component 1004 may receive an interference signal from another wireless device (e.g., the wireless device 1052).

The apparatus 1002 may include a determination component 1012. The determination component 1012 may receive signals through the reception component 1004 from a base station and/or a wireless device. Based on the received signals, the determination component 1012 may determine a transmission condition, for example, that indicates whether resources assigned by the apparatus may interfere with resources assigned for another communication by another wireless device (e.g., the wireless device 1052).

For example, the determination component 1012 may receive, from the base station 1050 through the reception component 1004, an indication of resources assigned for other communication by the other wireless device 1052. The determination component 1012 may determine if the indicated resources overlap with resources on which the apparatus 1002 is to communicate. In another aspect, the determination component 1012 may measure energy (or power) of signals received through the reception component 1004 and compare the measured energy to a threshold to determine if interference is likely.

The determination component may provide an indication of the transmission condition to a selection component 1014. The determination component 1012 may indicate whether resources for another communication overlap with resources on which the apparatus is to communicate and/or if measured energy of interference exceeds a threshold. Based on the indication of the transmission condition, the selection component 1014 may select a set of open-loop power control parameters. At least one set of open-loop power control parameters may be provided to the selection component 1014 from the reception component 1004.

The selection component 1014 may select a first set of open-loop power control parameters if the transmission condition indicates that it is likely communication by the apparatus 1002 may interfere with other communication, such as communication from the other wireless device 1052. This first set of open-loop power control parameters may be different from a default set. Alternatively, the selection component 1014 may select a second set of open-loop power control parameters if the transmission condition indicates it is unlikely communication by the apparatus 1002 would interfere with other communication. This second set of open-loop power control parameters may be a default set.

The apparatus may include additional components that perform each of the blocks of the algorithm in the aforementioned flowchart of FIG. 9. As such, each block in the aforementioned flowchart of FIG. 9 may be performed by a component and the apparatus may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

FIG. 11 is a diagram 1100 illustrating an example of a hardware implementation for an apparatus 1002' employing a processing system 1114. The processing system 1114 may be implemented with a bus architecture, represented generally by the bus 1124. The bus 1124 may include any number of interconnecting buses and bridges depending on the specific application of the processing system 1114 and the overall design constraints. The bus 1124 links together various circuits including one or more processors and/or hardware modules, represented by the processor 1104, the components 1004, 1010, 1012, 1014, and the computer-readable medium / memory 1406. The bus 1124 may also link various other circuits such as timing sources, peripherals, voltage regulators, and power management circuits, which are well known in the art, and therefore, will not be described any further.

The processing system 1114 may be coupled to a transceiver 1110. The transceiver 1110 is coupled to one or more antennas 1120. The transceiver 1110 provides a means for communicating with various other apparatus over a transmission medium. The transceiver 1110 receives a signal from the one or more antennas 1120, extracts information from the received signal, and provides the extracted information to the processing system 1114, specifically the reception component 1004. In addition, the transceiver 1110 receives information from the processing system 1114, specifically the transmission component 1010, and based on the received information, generates a signal to be applied to the one or more antennas 1120. The processing system 1114 includes a processor 1104 coupled to a computer-readable medium / memory 1106. The processor 1104 is responsible for general processing, including the execution of software stored on the computer-readable medium / memory 1106. The software, when executed by the processor 1104, causes the processing system 1114 to perform the various functions described *supra* for any particular apparatus. The computer-readable medium / memory 1106 may also be used for storing data that is manipulated by the processor 1104 when executing software. The processing system further includes at least one of the components 1004, 1010, 1012, 1014. The components may be software components running in the processor 1104, resident/stored in the computer readable medium / memory 1106, one or more hardware components coupled to the processor 1104, or some combination thereof. The processing system 1114 may be a component of the UE 650 and may include the memory 660 and/or at least one of the TX processor 668, the RX processor 656, and the controller/processor 659.

In one configuration, the apparatus 1100/1002' for wireless communication includes means for determining, by a first UE, a transmission condition associated with communication over a wireless channel. The apparatus further may include means for selecting, by the first UE, a set of open-loop power control parameters of at least two sets of open-loop power control parameters based on the transmission condition. The apparatus further may include means for transmitting, by the first UE, over the wireless channel with a power based on the selected set of open-loop power control parameters.

In an aspect of the apparatus 1100/1002', each set of the plurality of sets of parameters includes a first parameter associated with a semi-static base power level and a second parameter associated with path-loss compensation. In an aspect of the apparatus 1100/1002', the communication over the wireless channel includes uplink communication with a base station through WWAN communication. In an aspect of the apparatus 1100/1002', the transmission condition is associated with a D2D communication conducted by a second UE, and the means for determining the transmission condition over the wireless channel is configured to determine whether the first UE is causing interference to the second UE.

In an aspect of the apparatus 1100/1002', the means for determining whether the first UE is causing interference to the second UE is configured to determine whether the second UE is communicating through D2D communication on a same set of resources to be used by the first UE for the WWAN communication. In an aspect of the apparatus 1100/1002', the means for selecting the set of open-loop power control parameters is configured to select a first set of open-loop power control parameters when the first UE determines that the second UE is communicating on the same set of resources to be used by the first UE for the WWAN communication and to select a second set of open-loop power control parameters when the first UE determines that the second UE is communicating on a set of resources different than resources to be used by the first UE for the WWAN communication, wherein the second set of open-loop power control parameters is different from the first set of open-loop power control parameters.

In an aspect of the apparatus 1100/1002', the transmission condition is associated with an allocation between D2D resources and WWAN resources of a neighboring base station. In an aspect of the apparatus 1100/1002', the means for selecting the set of open-loop power control parameters is configured to select a first set of open-loop power control parameters when the first UE determines that the communication over the wireless channel is on at least one resource that overlaps with an allocated D2D resource of the neighboring base station and to select a second set of open-loop power control parameters when the first UE determines that the communication over the wireless channel is on at least resource that overlaps with an allocated WWAN resource of the neighboring base station, wherein the second set of open-loop power control parameters is different from the first set of open-loop power control parameters.

In an aspect of the apparatus 1100/1002', the communication over the wireless channel includes D2D communication with a second UE. In an aspect of the apparatus 1100/1002', the transmission condition is associated with WWAN communication conducted by a third UE, wherein the means for determining the transmission condition over the wireless channel is configured to determine whether the third UE is causing interference to the first UE.

In an aspect of the apparatus 1100/1002', the means for determining whether the third UE is causing interference is configured to determine whether the third UE is communicating through the WWAN on a same set of resources to be used by the first UE for the D2D communication. In an aspect of the apparatus 1100/1002', the means for selecting the set of open-loop power control parameters is configured to select a first set of open-loop power control parameters when the first UE determines that the third UE is communicating on the same set of resources to be used by the first UE for the D2D communication and select a second set of open-loop power control parameters when the first UE determines that the third UE is communicating on a set of resources different than resources to be used by the first UE for the D2D communication, wherein the second set of open-loop power control parameters is different from the first set of open-loop power control parameters.

In an aspect of the apparatus 1100/1002', the D2D communication is a D2D discovery, and the means for transmitting is configured to transmit a discovery signal for D2D discovery based on the selected set of open-loop power control parameters. In an aspect of the apparatus 1100/1002', the D2D communication is through a physical sidelink shared channel (PSSCH) or a physical sidelink control channel (PSCCH), and the means for transmitting is configured to transmit at least one of data through the PSSCH based on the selected set of open-loop power control parameters or control information through the PSCCH based on the selected set of open-loop power control parameters.

The aforementioned means may be one or more of the aforementioned components of the apparatus 1100 and/or the processing system 1114 of the apparatus 1002' configured to perform the functions recited by the aforementioned means. As described *supra,* the processing system 1114 may include the TX Processor 668, the RX Processor 656, and the controller/processor 659. As such, in one configuration, the aforementioned means may be the TX Processor 668, the RX Processor 656, and the controller/processor 659 configured to perform the functions recited by the aforementioned means.

It is understood that the specific order or hierarchy of blocks in the processes / flowcharts disclosed is an illustration of exemplary approaches. Based upon design preferences, it is understood that the specific order or hierarchy of blocks in the processes / flowcharts may be rearranged. Further, some blocks may be combined or omitted. The accompanying method claims present elements of the various blocks in a sample order, and are not meant to be limited to the specific order or hierarchy presented.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." The word "exemplary" is used herein to mean "serving as an example, instance, or illustration." Any aspect described herein as "exemplary" is not necessarily to be construed as preferred or advantageous over other aspects. Unless specifically stated otherwise, the term "some" refers to one or more. Combinations such as "at least one of A, B, or C," "at least one of A, B, and C," and "A, B, C, or any combination thereof' include any combination of A, B, and/or C, and may include multiples of A, multiples of B, or multiples of C. Specifically, combinations such as "at least one of A, B, or C," "at least one of A, B, and C," and "A, B, C, or any combination thereof' may be A only, B only, C only, A and B, A and C, B and C, or A and B and C, where any such combinations may contain one or more member or members of A, B, or C. All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. No claim element is to be construed as a means plus function unless the element is expressly recited using the phrase "means for."

## Claims

1. A method (900) of wireless communication of a first user equipment, UE, (102, 650, 806, 1002, 1100) the method comprising:
determining (902), by the first UE (102, 650, 806, 1002, 1100), a transmission condition associated with communication over a wireless channel, wherein the transmission condition is determined by detecting interference during resources unused by the first UE (102, 650, 806, 1002, 1100);
selecting (910, 912), by the first UE (102, 650, 806, 1002, 1100), a set of open-loop power control parameters of at least two sets of open-loop power control parameters based on the transmission condition; and
transmitting (914), by the first UE (102, 650, 806, 1002, 1100), over the wireless channel with a power based on the selected set of open-loop power control parameters.

2. The method of claim 1, wherein each set of the plurality of sets of parameters comprises a first parameter associated with a semi-static base power level and a second parameter associated with path-loss compensation.

3. The method of claim 1, wherein the communication over the wireless channel comprises uplink communication with a base station through wireless wide area network, WWAN, communication.

4. The method of claim 3, wherein the transmission condition is associated with a device-to-device, D2D, communication conducted by a second UE, and wherein the determining the transmission condition over the wireless channel comprises determining whether the first UE is causing interference to the second UE.

5. The method of claim 4, wherein the determining whether the first UE is causing interference to the second UE comprises determining whether the second UE is communicating through D2D communication on a same set of resources to be used by the first UE for the WWAN communication, and wherein the selecting the set of open-loop power control parameters comprises:
selecting a first set of open-loop power control parameters when the first UE determines that the second UE is communicating on the same set of resources to be used by the first UE for the WWAN communication; and
selecting a second set of open-loop power control parameters when the first UE determines that the second UE is communicating on a set of resources different than resources to be used by the first UE for the WWAN communication,
wherein the second set of open-loop power control parameters is different from the first set of open-loop power control parameters.

6. The method of claim 3, wherein the transmission condition is associated with an allocation, at a neighboring base station, between device-to-device, D2D, resources and WWAN resources.

7. The method of claim 6, wherein the selecting the set of open-loop power control parameters comprises:
selecting a first set of open-loop power control parameters when the first UE determines that the communication over the wireless channel is on at least one resource that overlaps with an allocated D2D resource of the neighboring base station; and
selecting a second set of open-loop power control parameters when the first UE determines that the communication over the wireless channel is on at least resource that overlaps with an allocated WWAN resource of the neighboring base station,
wherein the second set of open-loop power control parameters is different from the first set of open-loop power control parameters.

8. The method of claim 1, wherein the communication over the wireless channel comprises D2D communication with a second UE.

9. The method of claim 8, wherein the transmission condition is associated with WWAN communication conducted by a third UE, wherein the determining the transmission condition over the wireless channel comprises determining whether the third UE is causing interference to the first UE.

10. The method of claim 9, wherein the determining whether the third UE is causing interference comprises determining whether the third UE is communicating through the WWAN on a same set of resources to be used by the first UE for the D2D communication.

11. The method of claim 10, wherein the selecting the set of open-loop power control parameters comprises:
selecting a first set of open-loop power control parameters when the first UE determines that the third UE is communicating on the same set of resources to be used by the first UE for the D2D communication; and
selecting a second set of open-loop power control parameters when the first UE determines that the third UE is communicating on a set of resources different than resources to be used by the first UE for the D2D communication,
wherein the second set of open-loop power control parameters is different from the first set of open-loop power control parameters.

12. The method of claim 8, wherein the D2D communication is a D2D discovery, and the transmitting comprises transmitting a discovery signal for D2D discovery based on the selected set of open-loop power control parameters.

13. The method of claim 8, wherein the D2D communication is through a physical sidelink shared channel, PSSCH, or a physical sidelink control channel, PSCCH, and the transmitting comprises at least one of transmitting data through the PSSCH based on the selected set of open-loop power control parameters, or transmitting control information through the PSCCH based on the selected set of open-loop power control parameters.

14. An apparatus for wireless communication for a first user equipment, UE, (102, 650, 806, 1002, 1100) the apparatus comprising:
means for determining (1012), by the first UE (102, 650, 806, 1002, 1100), a transmission condition associated with communication over a wireless channel, wherein the transmission condition is determined by detecting for interference during resources unused by the first UE (102, 650, 806, 1002, 1100);
means for selecting (1014), by the first UE (102, 650, 806, 1002, 1100), a set of open-loop power control parameters of at least two sets of open-loop power control parameters based on the transmission condition; and
means for transmitting (1010,1120), by the first UE (102, 650, 806, 1002, 1100), over the wireless channel with a power based on the selected set of open-loop power control parameters.

15. A computer-readable medium storing (1106) computer executable code for wireless communication for a first user equipment, UE, (102, 650, 806, 1002, 1100) comprising code for:
determining, by the first UE (102, 650, 806, 1002, 1100), a transmission condition associated with communication over a wireless channel, wherein the transmission condition is determined by detecting for interference during resources unused by the first UE (102, 650, 806, 1002, 1100);
selecting, by the first UE (102, 650, 806, 1002, 1100), a set of open-loop power control parameters of at least two sets of open-loop power control parameters based on the transmission condition; and
transmitting, by the first UE (102, 650, 806, 1002, 1100), over the wireless channel with a power based on the selected set of open-loop power control parameters.

## Patentansprüche

1. Ein Verfahren (900) für eine drahtlose Kommunikation eines ersten Benutzergeräts (User Equipment bzw. UE) (102, 650, 806, 1002, 1100), wobei das Verfahren aufweist:
Bestimmen (902), durch das erste UE (102, 650, 806, 1002, 1100), einer Sendebedingung, die mit einer Kommunikation über einen drahtlosen Kanal assoziiert ist, wobei die Sendebedingung durch das Erfassen einer Interferenz während nicht durch das erste UE (102, 650, 806, 1002, 1100) verwendeten Ressourcen bestimmt wird,
Auswählen (910, 912), durch das erste UE (102, 650, 806, 1002, 1100), eines Satzes von Open-Loop-Leistungssteuerparametern von wenigstens zwei Sätzen von Open-Loop-Leistungssteuerparametern basierend auf der Sendebedingung, und
Senden (914), durch das erste UE (102, 650, 806, 1002, 1100), über den drahtlosen Kanal mit einer Leistung basierend auf dem ausgewählten Satz von Open-Loop-Leistungssteuerparametern.

2. Verfahren nach Anspruch 1, wobei jeder Satz aus der Vielzahl von Sätzen von Parametern einen ersten Parameter, der mit einem semistatischen Basisleistungspegel assoziiert ist, und einen zweiten Parameter, der mit einer Pfadverlustkompensation assoziiert ist, aufweist.

3. Verfahren nach Anspruch 1, wobei die Kommunikation über den drahtlosen Kanal eine Aufwärtsstrecke-Kommunikation mit einer Basisstation über eine Weitverkehrsfunknetz (Wireless Wide Area Network bzw. WWAN)-Kommunikation aufweist.

4. Verfahren nach Anspruch 3, wobei die Sendebedingung mit einer durch ein zweites UE durchgeführten Gerät-zu-Gerät (Device-to-Device bzw. D2D)-Kommunikation assoziiert ist und wobei das Bestimmen der Sendebedingung über den drahtlosen Kanal das Bestimmen, ob das erste UE eine Interferenz für das zweite UE verursacht, aufweist.

5. Verfahren nach Anspruch 4, wobei das Bestimmen, ob das erste UE eine Interferenz für das zweite UE verursacht, das Bestimmen, ob das zweite UE über eine D2D-Kommunikation auf einem gleichen Satz von Ressourcen kommuniziert, die durch das erste UE für die WWAN-Kommunikation zu verwenden sind, aufweist und wobei das Auswählen des Satzes von Open-Loop-Leistungssteuerparametern aufweist:
Auswählen eines ersten Satzes von Open-Loop-Leistungssteuerparametern, wenn das erste UE bestimmt, dass das zweite UE auf dem gleichen Satz von Ressourcen kommuniziert, die durch das erste UE für die WWAN-Kommunikation zu verwenden sind, und
Auswählen eines zweiten Satzes von Open-Loop-Leistungssteuerparametern, wenn das erste UE bestimmt, dass das zweite UE auf einem Satz von Ressourcen kommuniziert, die verschieden sind von den Ressourcen, die durch das erste UE für die WWAN-Kommunikation zu verwenden sind,
wobei der zweite Satz von Open-Loop-Leistungssteuerparametern verschieden ist von dem ersten Satz von Open-Loop-Leistungssteuerparametern.

6. Verfahren nach Anspruch 3, wobei die Sendebedingung mit einer Zuweisung an einer benachbarten Basisstation zwischen Gerät-zu-Gerät (Device-to-Device bzw. D2D)-Ressourcen und WWAN-Ressourcen assoziiert ist.

7. Verfahren nach Anspruch 6, wobei das Auswählen des Satzes von Open-Loop-Leistungssteuerparametern aufweist:
Auswählen eines ersten Satzes von Open-Loop-Leistungssteuerparametern, wenn das erste UE bestimmt, dass die Kommunikation über den drahtlosen Kanal auf wenigstens einer Ressource erfolgt, die mit einer zugewiesenen D2D-Ressource der benachbarten Basisstation überlappt, und
Auswählen eines zweiten Satzes von Open-Loop-Leistungssteuerparametern, wenn das erste UE bestimmt, dass die Kommunikation über den drahtlosen Kanal auf wenigstens einer Ressource erfolgt, die mit einer zugewiesenen WWAN-Ressource der benachbarten Basisstation überlappt,
wobei der zweite Satz von Open-Loop-Leistungssteuerparametern verschieden ist von dem ersten Satz von Open-Loop-Leistungssteuerparametern.

8. Verfahren nach Anspruch 1, wobei die Kommunikation über den drahtlosen Kanal eine D2D-Kommunikation mit einem zweiten UE aufweist.

9. Verfahren nach Anspruch 8, wobei die Sendebedingung mit einer durch ein drittes UE durchgeführten WWAN-Kommunikation assoziiert ist, wobei das Bestimmen der Sendebedingung über den drahtlosen Kanal das Bestimmen, ob das dritte UE eine Interferenz für das erste UE verursacht, aufweist.

10. Verfahren nach Anspruch 9, wobei das Bestimmen, ob das dritte UE eine Interferenz verursacht, das Bestimmen, ob das dritte UE über das WWAN auf einem gleichen Satz von Ressourcen kommuniziert, die durch das erste UE für die D2D-Kommunikation zu verwenden sind, aufweist.

11. Verfahren nach Anspruch 10, wobei das Auswählen des Satzes von Open-Loop-Leistungssteuerparametern aufweist:
Auswählen eines ersten Satzes von Open-Loop-Leistungssteuerparametern, wenn das erste UE bestimmt, dass das dritte UE auf dem gleichen Satz von Ressourcen kommuniziert, die durch das erste UE für die D2D-Kommunikation zu verwenden sind, und
Auswählen eines zweiten Satzes von Open-Loop-Leistungssteuerparametern, wenn das erste UE bestimmt, dass das dritte UE auf einem Satz von Ressourcen kommuniziert, die verschieden sind von den Ressourcen, die durch das erste UE für die D2D-Kommunikation zu verwenden sind,
wobei der zweite Satz von Open-Loop-Leistungssteuerparametern verschieden ist von dem ersten Satz von Open-Loop-Leistungssteuerparametern.

12. Verfahren nach Anspruch 8, wobei die D2D-Kommunikation eine D2D-Entdeckung ist und wobei das Senden das Senden eines Entdeckungssignals für eine D2D-Entdeckung basierend auf dem ausgewählten Satz von Open-Loop-Leistungssteuerparametern aufweist.

13. Verfahren nach Anspruch 8, wobei die D2D-Kommunikation über einen gemeinsamen physikalischen Seitenverbindungskanal (PSSCH) oder einen physikalischen Seitenverbindungssteuerkanal (PSCCH) erfolgt und das Senden das Senden von Daten über den PSSCH basierend auf dem ausgewählten Satz von Open-Loop-Leistungssteuerparametern und/oder das Senden von Steuerinformationen über den PSCCH basierend auf dem ausgewählten Satz von Open-Loop-Leistungssteuerparametern aufweist.

14. Eine Vorrichtung für eine drahtlose Kommunikation für ein erstes Benutzergerät (User Equipment bzw. UE) (102, 650, 806, 1002, 1100), wobei die Vorrichtung aufweist:
Mittel zum Bestimmen (1012), durch das erste UE (102, 650, 806, 1002, 1100), einer Sendebedingung, die mit einer Kommunikation über einen drahtlosen Kanal assoziiert ist, wobei die Sendebedingung durch das Erfassen einer Interferenz während nicht durch das erste UE (102, 650, 806, 1002, 1100) verwendeten Ressourcen bestimmt wird,
Mittel zum Auswählen (1014), durch das erste UE (102, 650, 806, 1002, 1100), eines Satzes von Open-Loop-Leistungssteuerparametern von wenigstens zwei Sätzen von Open-Loop-Leistungssteuerparametern basierend auf der Sendebedingung, und
Mittel zum Senden (1010, 1120), durch das erste UE (102, 650, 806, 1002, 1100), über den drahtlosen Kanal mit einer Leistung basierend auf dem ausgewählten Satz von Open-Loop-Leistungssteuerparametern.

15. Ein computerlesbares Medium zum Speichern (1106) eines computerlesbaren Codes für eine drahtlose Kommunikation für ein erstes Benutzergerät (User Equipment bzw. UE) (102, 650, 806, 1002, 1100) einschließlich von Code zum:
Bestimmen, durch das erste UE (102, 650, 806, 1002, 1100), einer Sendebedingung, die mit einer Kommunikation über einen drahtlosen Kanal assoziiert ist, wobei die Sendebedingung durch das Erfassen einer Interferenz während nicht durch das erste UE (102, 650, 806, 1002, 1100) verwendeten Ressourcen bestimmt wird,
Auswählen, durch das erste UE (102, 650, 806, 1002, 1100), eines Satzes von Open-Loop-Leistungssteuerparametern von wenigstens zwei Sätzen von Open-Loop-Leistungssteuerparametern basierend auf der Sendebedingung, und
Senden, durch das erste UE (102, 650, 806, 1002, 1100), über den drahtlosen Kanal mit einer Leistung basierend auf dem ausgewählten Satz von Open-Loop-Leistungssteuerparametern.

## Revendications

1. Un procédé (900) de communication sans fil d'un premier équipement d'utilisateur, UE, (102, 650, 806, 1002, 1100), le procédé comprenant :
la détermination (902), par le premier UE (102, 650, 806, 1002, 1100), d'une condition de transmission associée à une communication par l'intermédiaire d'un canal sans fil, où la condition de transmission est déterminée par la détection d'un brouillage au cours de ressources non utilisées par le premier UE (102, 650, 806, 1002, 1100),
la sélection (910, 912), par le premier UE (102, 650, 806, 1002, 1100), d'un ensemble de paramètres de régulation de puissance à boucle ouverte parmi au moins deux ensembles de paramètres de régulation de puissance à boucle ouverte en fonction de la condition de transmission, et
la transmission (914), par le premier UE (102, 650, 806, 1002, 1100), par l'intermédiaire du canal sans fil avec une puissance basée sur l'ensemble de paramètres de régulation de puissance à boucle ouverte sélectionné.

2. Le procédé selon la Revendication 1, où chaque ensemble de la pluralité d'ensembles de paramètres comprend un premier paramètre associé à un niveau de puissance de base semi-statique et un deuxième paramètre associé à une compensation d'affaiblissement de propagation.

3. Le procédé selon la Revendication 1, où la communication par l'intermédiaire du canal sans fil comprend une communication en liaison montante avec une station de base par l'intermédiaire d'une communication de réseau étendu sans fil, WWAN.

4. Le procédé selon la Revendication 3, où la condition de transmission est associée à une communication de dispositif à dispositif, D2D, conduite par un deuxième UE, et où la détermination de la condition de transmission par l'intermédiaire du canal sans fil comprend la détermination si le premier UE provoque un brouillage au deuxième UE.

5. Le procédé selon la Revendication 4, où la détermination si le premier UE provoque un brouillage au deuxième UE comprend la détermination si le deuxième UE communique par l'intermédiaire d'une communication D2D sur un même ensemble de ressources à utiliser par le premier UE pour la communication WWAN, et où la sélection de l'ensemble de paramètres de régulation de puissance à boucle ouverte comprend :
la sélection d'un premier ensemble de paramètres de régulation de puissance à boucle ouverte lorsque le premier UE détermine que le deuxième UE communique sur le même ensemble de ressources à utiliser par le premier UE pour la communication WWAN, et
la sélection d'un deuxième ensemble de paramètres de régulation de puissance à boucle ouverte lorsque le premier UE détermine que le deuxième UE communique sur un ensemble de ressources différentes des ressources à utiliser par le premier UE pour la communication WWAN,
où le deuxième ensemble de paramètres de régulation de puissance à boucle ouverte est différent du premier ensemble de paramètres de régulation de puissance à boucle ouverte.

6. Le procédé selon la Revendication 3, où la condition de transmission est associée à une attribution, au niveau d'une station de base voisine, entre des ressources de dispositif à dispositif, D2D, et des ressources WWAN.

7. Le procédé selon la Revendication 6, où la sélection de l'ensemble de paramètres de régulation de puissance à boucle ouverte comprend :
la sélection d'un premier ensemble de paramètres de régulation de puissance à boucle ouverte lorsque le premier UE détermine que la communication par l'intermédiaire du canal sans fil est sur au moins une ressource qui chevauche une ressource D2D attribuée de la station de base voisine, et
la sélection d'un deuxième ensemble de paramètres de régulation de puissance à boucle ouverte lorsque le premier UE détermine que la communication par l'intermédiaire du canal sans fil est sur au moins une ressource qui chevauche une ressource WWAN attribuée de la station de base voisine,
où le deuxième ensemble de paramètres de régulation de puissance à boucle ouverte est différent du premier ensemble de paramètres de régulation de puissance à boucle ouverte.

8. Le procédé selon la Revendication 1, où la communication par l'intermédiaire du canal sans fil comprend une communication D2D avec un deuxième UE.

9. Le procédé selon la Revendication 8, où la condition de transmission est associée à une communication WWAN conduite par un troisième UE, où la détermination de la condition de transmission par l'intermédiaire du canal sans fil comprend la détermination si le troisième UE provoque un brouillage au premier UE.

10. Le procédé selon la Revendication 9, où la détermination si le troisième UE provoque un brouillage comprend la détermination si le troisième UE communique par l'intermédiaire du WWAN sur un même ensemble de ressources à utiliser par le premier UE pour la communication D2D.

11. Le procédé selon la Revendication 10, où la sélection de l'ensemble de paramètres de régulation de puissance à boucle ouverte comprend :
la sélection d'un premier ensemble de paramètres de régulation de puissance à boucle ouverte lorsque le premier UE détermine que le troisième UE communique sur le même ensemble de ressources à utiliser par le premier UE pour la communication D2D, et
la sélection d'un deuxième ensemble de paramètres de régulation de puissance à boucle ouverte lorsque le premier UE détermine que le troisième UE communique sur un ensemble de ressources différentes des ressources à utiliser par le premier UE pour la communication D2D,
où le deuxième ensemble de paramètres de régulation de puissance à boucle ouverte est différent du premier ensemble de paramètres de régulation de puissance à boucle ouverte.

12. Le procédé selon la Revendication 8, où la communication D2D est une découverte D2D, et la transmission comprend la transmission d'un signal de découverte destiné à une découverte D2D en fonction de l'ensemble de paramètres de régulation de puissance à boucle ouverte sélectionné.

13. Le procédé selon la Revendication 8, où la communication D2D est par l'intermédiaire d'un canal partagé en liaison latérale physique, PSSCH, ou un canal de commande en liaison latérale physique, PSCCH, et la transmission comprend au moins une transmission parmi une transmission de données par l'intermédiaire du PSSCH en fonction de l'ensemble de paramètres de régulation de puissance à boucle ouverte sélectionné ou une transmission d'informations de commande par l'intermédiaire du PSCCH en fonction de l'ensemble de paramètres de régulation de puissance à boucle ouverte sélectionné.

14. Un appareil de communication sans fil destiné à un premier équipement d'utilisateur, UE, (102, 650, 806, 1002, 1100) l'appareil comprenant :
un moyen de détermination (1012), par le premier UE (102, 650, 806, 1002, 1100), d'une condition de transmission associée à une communication par l'intermédiaire d'un canal sans fil, où la condition de transmission est déterminée par la détection d'un brouillage au cours de ressources non utilisées par le premier UE (102, 650, 806, 1002, 1100),
un moyen de sélection (1014), par le premier UE (102, 650, 806, 1002, 1100), d'un ensemble de paramètres de régulation de puissance à boucle ouverte parmi au moins deux ensembles de paramètres de régulation de puissance à boucle ouverte en fonction de la condition de transmission, et
un moyen de transmission (1010, 1120), par le premier UE (102, 650, 806, 1002, 1100), par l'intermédiaire du canal sans fil avec une puissance basée sur l'ensemble de paramètres de régulation de puissance à boucle ouverte sélectionné.

15. Un support lisible par ordinateur conservant en mémoire (1106) du code exécutable par ordinateur pour une communication sans fil destinée à un premier équipement d'utilisateur, UE, (102, 650, 806, 1002, 1100) comprenant du code destiné à :
la détermination, par le premier UE (102, 650, 806, 1002, 1100), d'une condition de transmission associée à une communication par l'intermédiaire d'un canal sans fil, où la condition de transmission est déterminée par la détection d'un brouillage au cours de ressources non utilisées par le premier UE (102, 650, 806, 1002, 1100),
la sélection, par le premier UE (102, 650, 806, 1002, 1100), d'un ensemble de paramètres de régulation de puissance à boucle ouverte d'au moins deux ensembles de paramètres de régulation de puissance à boucle ouverte en fonction de la condition de transmission, et
la transmission, par le premier UE (102, 650, 806, 1002, 1100), par l'intermédiaire du canal sans fil avec une puissance basée sur l'ensemble de paramètres de régulation de puissance à boucle ouverte sélectionné.
